Europäisches Patentamt

European Patent Office

Office européen des brevets

(11) Publication number: **0 447 873 A2**

# EUROPEAN PATENT APPLICATION

(21) Application number: 91103335.5

(51) Int. Cl.⁵: **H04L 12/40**

(22) Date of filing: **05.03.91**

(30) Priority: **05.03.90 US 488728**

(43) Date of publication of application:
**25.09.91 Bulletin 91/39**

(84) Designated Contracting States:
**AT BE CH DE DK ES FR GB GR IT LI LU NL SE**

(71) Applicant: **LONE WOLF, INC.**
**1505 Aviation Blvd.**
**Redondo Beach, California 90278(US)**

(72) Inventor: **Lacas, Mark A.**
**1717 Harriman Lane**
**Redondo Beach, California 90278(US)**
Inventor: **Warman, David J.**
**23147 Mariano Street**
**Woodland Hills, California 91367(US)**

(74) Representative: **Patentanwälte Grünecker,**
**Kinkeldey, Stockmair & Partner**
**Maximilianstrasse 58**
**W-8000 München 22(DE)**

(54) **Communicating system.**

(57) Stations in a sequence accepting a vector from preceding stations in the sequence communicate data packets to other stations in the sequence. Each station receiving the vector becomes spliced out of the sequence by communicating such a desire to the preceding station, which then provides for the passing of the vector to the station following the next station. Alternatively, an individual station (not in the sequence) between the communicating and next stations can be spliced into the sequence by communicating to all stations such a desire before any response from the next station. If the next station does not respond to the communicating station, the communicating station can splice the next station out of the sequence and provide for the passing of the vector to the following station. Some or all stations may be in a performance mode higher than a set-up mode. Any station preprogrammed to be active in the sequence and to operate in the performance mode may initiate the operation of the performance mode sequence when the stations are operating in the set-up mode. In each cycle, if no station in the performance mode requests the operation to continue in such mode, the stations will revert to the set-up mode. If several successive stations become lost from the sequence, the sequence becomes patched by a special communication from each station to patch the next station into the sequence. In a start-up operation, a first station identifies itself by a communication to the other stations and the special communication in the sequence described in the previous sentence to progressively patch the other stations into the sequence.

EP 0 447 873 A2

| VECTOR ss→nn | | | | | | | |
|---|---|---|---|---|---|---|---|
| ⌐·-·····tt | tttttt | FFnn | ss | pd | pmi/pma | cccc | ·ttttt |

| SYNCHRONIZATION | | | | | | | |
|---|---|---|---|---|---|---|---|
| tt····tt | ttttt | FE 00 | ss | ⌇⌇ | | cccc | tttt·t |

| SPLICE ss→nn FOR dd | | | | | | | |
|---|---|---|---|---|---|---|---|
| t·····t· | tttttt | FD nn | ss | sd | | cccc | ttttt |

| RESPONSE ss→nn | | | | | | | |
|---|---|---|---|---|---|---|---|
| tt·····tt | tttttt | FB nn | ss | STATUS: ACCEPT/REJ·NO·BFFR | | cccc | ttttt |

| DATA ss→nn | | | | | | | |
|---|---|---|---|---|---|---|---|
| tt·····ttt | tttttt | FC nn | ss | RTV | ddd...ddd | cccc | ttttt |

| BROADCAST ss→9999 | | | | | | | |
|---|---|---|---|---|---|---|---|
| ······tt | tttttt | 9999 | ss | RTV | ddd...ddd | cccc | ttttt: |

| BROADCAST→ALL NODES | | | | | | | |
|---|---|---|---|---|---|---|---|
| ttt·····ttt | tttttt | FFFF | ss | RTV | ddd...ddd | cccc | ttttt |

| PREAMBLE | FLAG | ADDRESS | SOURCE STATION.ID | PACKET TYPE | PACKET DATA | CYCLIC REDUNDANCY CHECK | FLAG |

FIG. 1

This invention relates to a system including a plurality of stations disposed in a logical sequence for providing a communication of data between different stations in the sequence on a cyclic basis. The invention also relates to a system including a plurality of stations which are interconnected to form a local area and/or wide area networking system for providing a communication of data from each station in the system to other stations in the system. The system of this invention is particularly adapted to logically splice stations into and out of a sequence without affecting the operation of other stations in the sequence. This invention also relates to a method of providing a controlled communication of data between different stations in a sequence.

Systems for recording and controlling the creation of music have become increasingly complex and sophisticated with the advent and development of digital computers and data processing systems. For example, a musical product can be shaped by the use of systems including digital computers and data processing to provide sounds and effects not capable of being provided from the capabilities normally provided by any instrument or combination of instruments.

Even though the systems now in use can provide sounds and effects not capable of being normally provided by any instrument or combination of instruments, such systems have severe limitations in their use. For example, the systems now in use transmit data from different stations in the system at a relatively low rate such as approximately 31.25 kilobits per second. This limits the number of stations which can be included in the system before undesirable audible effects occur. For example, when ten (10) stations are included in such a system, the delay between the communication of information from the first and last stations is audible to the ear. When as many as twenty (20) stations are included in the system, the delay between communications from the first and last stations is objectionable. This can be overcome somewhat by providing parallel networks but it is not easy to construct or control such configurations.

The systems now in use enable a plurality of music synthesizers from different manufacturers to be controlled from a single source at the same time. However, the systems do not have the flexibility of providing for the insertion of new stations into the sequence or of providing for the removal of stations from the sequence without affecting at least temporarily the sound produced by such systems. Because of this, the systems now in use do not have the flexibility which performers often desire and even require. For example, they prevent different synthesizers and master keyboards from being included in the system on a flexible basis.

The systems now in use also lack other flexibilities. For example, during the time that a system is being set up, different stations in the set-up mode may transmit data packets to other stations in the set-up mode. In this way, adjustments can be provided in the sound and sound effects transmitted by the different stations to provide a balance in the composite sound from the different stations. After this adjustment has been provided, it may be desired to provide for an operation of the stations in a performance mode where the performers at different stations actually perform in producing music which is melded into a composite sound. It may be desired to have not all of the stations in the set-up mode included in the performance mode.

The systems now in use are not able to be converted easily from the set-up mode to the performance mode, particularly when only selected stations in the set-up mode operate in the performance mode. For example, the systems now in use often require changes in the connections between different stations to be made physically under such circumstances so that an interruption in the operation of the system occurs.

The limitations discussed in the previous paragraph have been compounded or aggravated because the instruments, such as synthesizers, at the different stations have been manufactured by different companies and have been provided with different data bases by such different manufacturers. This has required different programs to be used for the different stations. Even with the expanded capabilities of current data processing systems, it has been difficult for the data processing systems to meld the different programs into an operative system.

There are other serious problems with the systems now in use. For example, several stations may inadvertently become simultaneously disconnected from the system. Under such circumstances, it has been difficult for the systems now in use to adapt quickly to restore such stations into the system. As another example, when the power to the systems now in use has been turned on, it has been difficult for the stations to become programmed into the system automatically and quickly in a particular sequence.

This invention provides a system which overcomes all of the limitations discussed in the previous paragraph. The system of this invention is able quickly to splice stations into a sequence or splice stations out of the sequence in accordance with communications from such stations without affecting the operation of other stations in the sequence. It is also able to splice stations quickly out of a sequence without affecting the operation of other stations in the sequence when attempts to communicate with such spliced-out stations are unsuccessful. It is able to change between a set-up mode and a performance mode in

3

accordance with communications from such stations which will be operating in the performance mode. It is also able to return at any time to the set-up mode. It is able to restore stations into the system, without affecting the operation of other stations in the sequence and without any noticeable interruption in the operation of the system, when such stations are inadvertently lost from the system. It is further able to connect the stations quickly in a proper sequence in the system when power is first applied to the system in a start-up mode.

In one embodiment of the invention, stations accepting a vector from preceding stations in the sequence communicate data packets to other stations in the sequence. Each station receiving the vector can become spliced out of the sequence by communicating such a desire to the preceding station in the sequence. The communicating station then provides for the passing of the vector to the station following the next station in the sequence.

Alternatively, an individual station (not in the sequence) between the communicating and next stations can communicate to all stations, before any response from the next station, its desire to be spliced into the sequence. This station then splices into the sequence. If the next station does not respond to the station communicating with it, the communicating station can splice the next station out of the sequence and provide for the passing of the vector to the station following the next station in the sequence.

When stations in the sequence are in a set-up mode, only some stations may be in a performance mode higher than the set-up mode. Any station programmed to be active in the sequence and to operate in the performance mode may initiate an operation in the performance mode sequence when the stations are in the set-up mode. In each cycle of operation in the performance mode, if no station in the performance mode requests the operation to continue in the performance mode, the stations will revert to the set-up mode.

If several successive stations become lost from the sequence, the sequence becomes patched by a special communication from the station preceding such successive stations to include the next one of these successive stations in the sequence. This station then patches itself into the sequence. This process continues until all of the stations have been patched into the sequence. In a start-up operation, a first station identifies itself, and by communication to the other stations the special communication then occurs in the sequence described above in this paragraph to progressively patch such other stations into the sequence.

In the drawings:

Figure 1 illustrates the format of signals communicated between different stations in a sequence defining one embodiment of this invention;

Figure 1A is a table indicating different types of information represented by the format shown in Figure 1;

Figure 2 illustrates the time sequence for the transmission of the signals in the format shown in Figure 1;

Figure 2A indicates different registers included at each station in the sequence to provide for the proper operation of such station in the sequence;

Figure 3 illustrates a first sequence of stations in a set-up mode and another sequence of stations in a performance mode, the performance mode being at a higher level than the set-up mode, and further illustrates how a vector is passed to successive stations in each of the sequences respectively constituting the set-up mode and the performance mode;

Figure 4 illustrates the relationship of the stations shown in Figure 3 when an additional station not in a sequence is to be spliced into the sequence and the relationship of the stations after the additional station has been spliced into the sequence;

Figure 4A illustrates an example of the sequence of events for splicing into the sequence the additional station shown in Figure 4;

Figure 5 illustrates the relationship of the stations shown in Figure 3 when one of the stations in the sequence is to be spliced out of the sequence and further illustrates the relationship of the stations when such station has been spliced out of the sequence;

Figure 5A illustrates an example of the sequence of events for splicing out of the sequence the station shown in Figure 5;

Figure 6 figuratively illustrates the interrelationship between the stations in the set-up mode and the stations in the performance mode, the performance mode being at a higher level than the set-up mode;

Figure 7 provides a schematic illustration of the interrelationship between the stations in a set-up mode and the stations in a performance mode when the stations are changed from an operation in the set-up mode to an operation in the performance mode;

Figure 8 illustrates the relationship between a plurality of stations in a sequence and further illustrates the interrelationship established between such stations when one of the stations is lost from the sequence;

Figure 9 illustrates the relationship between a plurality of stations in a sequence and further illustrates the interrelationship established between such stations when more than one of the stations is lost from the sequence; and

Figures 10A-10F provide specific examples on a timed basis of different types of operations shown in Figures 3-9.

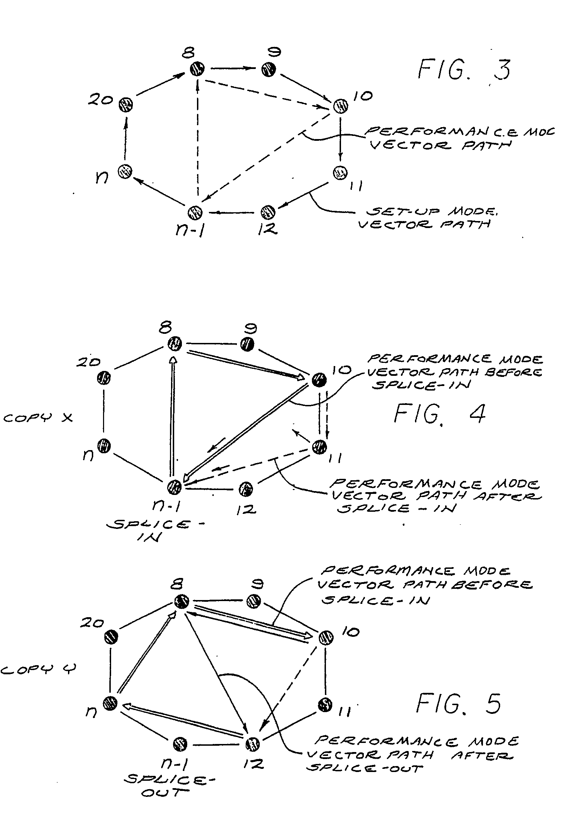

This invention includes a plurality of stations displaced from one another and operative to become activated in a logical sequence. For example, in the embodiment shown in Figure 3, a plurality of stations designated as 8, 9, 10, 11, 12, n-1 and n are displaced from one another and are operative to become activated in a sequence. As one example, different musical instruments may be disposed at individual ones of the stations in the sequence. Alternatively, musical equipment may be disposed at certain stations in the sequence and control equipment such as equipment for receiving data to provide for a blending and shaping of the sounds from the different instruments may be disposed at other stations in the sequence. However, it will be appreciated that the disposition of musical instruments and controls at the individual stations in the sequence is only by way of illustration and that other types of equipment may be disposed at the stations in the sequence for purposes far removed from the blending and shaping of musical sounds.

Alternatively, the same type of equipment may be disposed at the individual stations in the sequence but different types of messages may be transmitted from such equipment at the individual stations in the sequence to other stations in the sequence. These types of messages may constitute measurements of parameters such as temperature, pressure and humidity. These measurements may be transmitted from each station in the sequence to other stations in the sequence to control the operation of equipment at such other stations or may be transmitted to a centralized data processing station which then processes such signals and communicates with the stations to indicate how such stations should operate.

In the normal mode of operation, the stations in the sequence become successively activated. For example, station 8 in Figure 3 may be initially activated by the passage of a vector to station 8. When activated, station 8 may communicate a data packet to another station, such as station 12, in the sequence. Such a communication will be discussed in detail subsequently. The data packet communicated from station 8 to station 12 may include data representing sounds from a musical instrument, or from musical instruments, at station 8. Alternatively, the data packet communicated from station 8 to station 12 may be an instruction to station 12 to emphasize sound in a certain frequency range or to mute sound in another frequency range.

It will be appreciated that data representing sounds are only one of a myriad of different communications which may be provided by the station 8 and the other stations in the sequence. For example, although the invention is specifically disclosed with reference to musical equipments and musical systems, it will be appreciated that the invention is intended to receive and communicate data, preferably in digital form, relating to any parameters, equipments and systems.

After station 8 has communicated the data packet to station 12, station 8 communicates in Figure 3 a packet to the other stations to activate a particular one of the stations in the sequence. For example, station 9 may be the next station in the sequence. Although the activating packet may be communicated to all of the stations in the sequence, it may be specifically directed in its coding to the station to be activated. To distinguish between the communication of a data packet and the communication of a packet for activating a station (e.g. station 9), the communication of the activating packet to all of the stations, but intended for a particular station, is designated as "providing for the passing of a vector". The passing of the vector from station 8 to all of the stations occurs through the transmission of information from station 8 in a form which station 9 can identify as the passing of the vector to station 9 by specific information in such transmission.

When station 9 receives the vector from station 8, station 9 transmits a data packet to another station such as station n. This indicates to station 8 that station 9 has received and accepted the vector. Station 9 then provides for the passing of the vector to station 10 by communicating the vector to all of the stations in the sequence. However, the vector is specifically directed in its coding to station 10, the next station in the sequence shown in Figure 3. In this way, each station in the sequence progressively receives the vector and transmits a data packet to another station, or other stations, in the sequence.

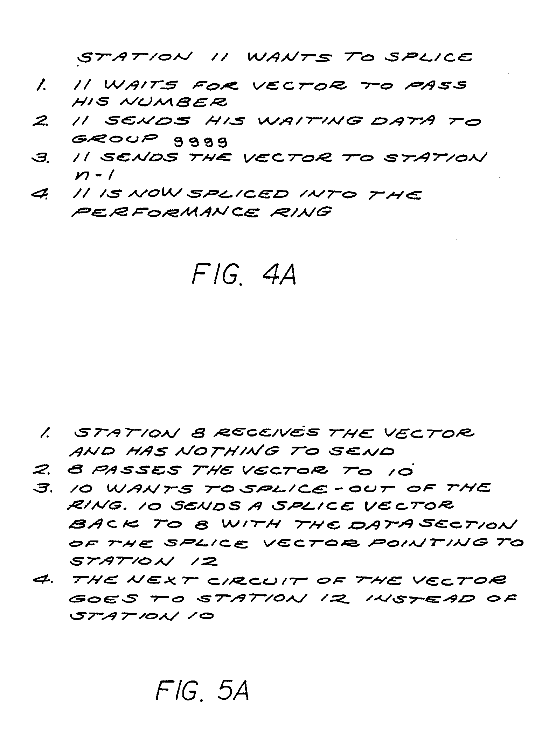

This invention is able to accomplish results not capable of being accomplished in the prior art. For example, as shown by double lines in Figure 4, a sequence may constitute stations 8, 10 and n-1. When the vector has passed to station 10 and station 10 has transmitted a data packet to another station, station 10 then provides for the passage of the vector to station n-1 by communicating the vector to all of the stations but specifying station in the coding in such communication. However, before station n-1 can accept the vector from station 10, station 11 can intervene and send a data packet to another station. Station 11 is able to intervene at this time because it is disposed between stations 10 and n-1. Station 11 then provides for the passing of the vector to station n-1 for the transmission of a data packet from station n-1.

Station 11 is thereafter spliced into the sequence so that the sequence includes stations 8, 10, 11 and n-1. In such a sequence, station 11 receives the vector from station 10 in each cycle of operation and provides for the passing of the vector to station n-1. This is indicated by broken lines between stations 10 and 11 and between stations 11 and n-1 and by double lines between stations n-1 and 8 and between stations 8 and 10.

The sequences discussed above and other sequences will be discussed in detail subsequently. For example, in Figure 5, station 10 may be spliced out of a sequence originally constituting stations 8, 10, 12 and n (as indicated by double lines joining the stations) and subsequently constituting stations 8, 12 and n. In the sequence shown in Figure 5, station 10 is spliced out of the sequence specifically on the basis of instructions from such station.

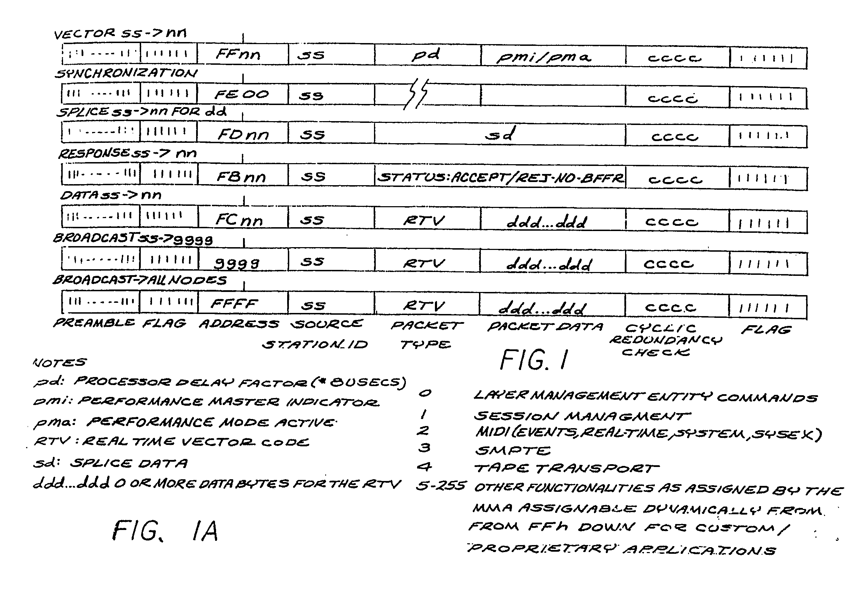

Figure 1 indicates the different types of packets communicated between stations in a sequence. Each packet is in a particular format. For example, each packet initially may include a "Preamble". The preamble may be in a form to synchronize the transmission of information by one (1) station with the reception, acknowledgement and decoding of such information by another station. For example, each preamble may consist of sixteen (16) successive binary bits each having a logic level designating a binary "1".

Following the preamble in each packet in Figure 1 is a "Flag". The flag may consist of a plurality of binary bits in a particular pattern. For example, the flag may consist of six (6) successive binary bits each having a logic level designating a binary "1". The flag may identify that the transmission of pertinent information in each packet follows the flag.

After the generation of the flag, each packet may include an "Address" designating the station or stations to which the packet is being sent. For example, different stations are identified in Figure 1 as "FFnn", "FEoo", "FDnn", "FBnn", "FCnn", "FFFF" and "gggg". The designation "gggg" indicates that the data packet is to be transmitted by the communicating station to all of the other stations in the sequence. The address in each data packet may be in the form of a plurality of binary bits in a hexadecimal code. This format constitutes a world-wide standard well known in the art.

Packets with an "Address" of "FFFF" are to be received and processed by all of the stations in the sequence. An Address of "FFFF" is used for such functions as system timing information and sequencer controls. An Address flag of "FFnn" is used to implement the protocol of providing for the passing the vector. An Address of "FEnn" indicates the transmission of a packet to a particular station, which then acknowledges the receipt of the packet by sending a response packet to this effect to the communicating station. The Address "FDnn" represents the response packet which the receiving station sends to the communicating station to acknowledge that it has received the packet from the communicating station. An Address of "FCnn" is actually not being used at present but is being reserved for future applications. In each of the different Address, different designations between "oo" and "nn" are used to identify individual stations in the sequence.

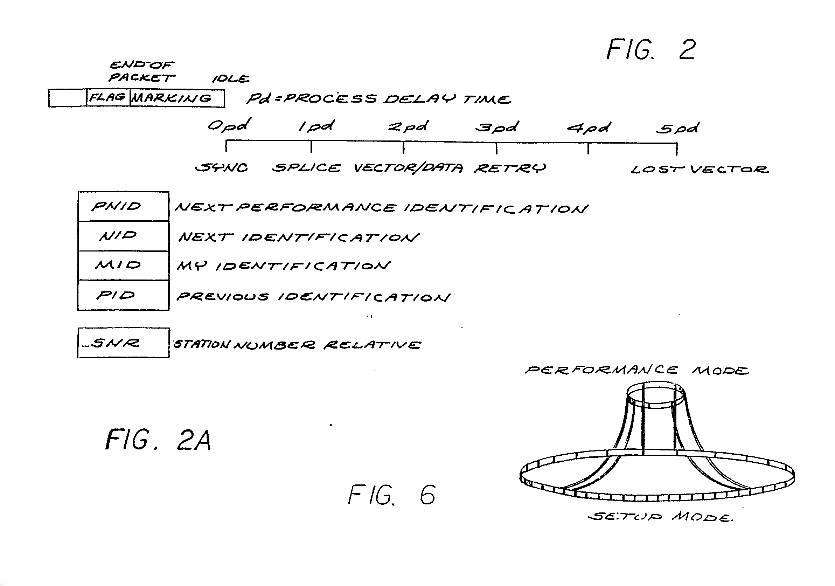

As indicated in Figure 1, the station providing the communicating packet may next identify itself in a plurality of bits designated as "Source station ID". This identification is stored in a register identified as "MID" (meaning "My Identification") in Figure 2A. In Figure 1, each of the different examples is identified as being transmitted by a single source. This source is identified in Figure 1 as "ss". It will be appreciated that different designations may be provided for the individual stations in the portion of each packet identified as "Source Station ID".

Particular information identified as "Packet Type" in Figure 1 is then transmitted in each packet to indicate the type of packet being communicated. For example, the particular information may indicate that the communicating station desires to be spliced into the sequence or that it desires to be spliced out of the sequence. The particular information identified as "Packet Type" may also indicate the speed of response of the communicating station. This is indicated by the designation "pd" in Figure 1. Each station in the sequence may have an individual speed of response and this speed of response may be different from the speed of response of the other stations in the sequence. The system then adjusts its speed of response automatically to the station having the lowest speed of response in the sequence.

The particular information identified as "Packet Type" in each packet may also provide a wide variety of other indications. These are numbered in Figure 1 as "0"-"225" in the column under the portion of the communication identified as "Packet Type". For example, the numeral "4" may designate the operation of a tape transport. As another example, the numeral "2" may designate "MIDI" (events, real-time, system, SYSEX). The term "MIDI" refers to a system now in widespread use for providing a digital control on a remote basis over the operation of musical synthesizers. Such a system does not have a number of the features disclosed and claimed for the system of this invention.

The "Packet Type" may also identify in coded form a "Real Time Vector" ("RTV") indicated in Figures 1 and 1A. The Real Time Vector indicates that information such as numerical information is being transmitted in the following portion (designated as " Packet Data") in each packet. This Real Time Vector may be further defined in the "Packet Data" (the portion of the packet following the "Packet Type") by a

6

zero (0), a one (1) or a number of data bytes. The data bytes are identified schematically in Figure 1 as "ddd...ddd" to indicate that the number of data bytes is variable for each packet communicated from a station in the sequence to one or more of the other stations in the sequence. The letter "d" symbolically indicates that any value can be provided in the sequence designated as "ddd...ddd".

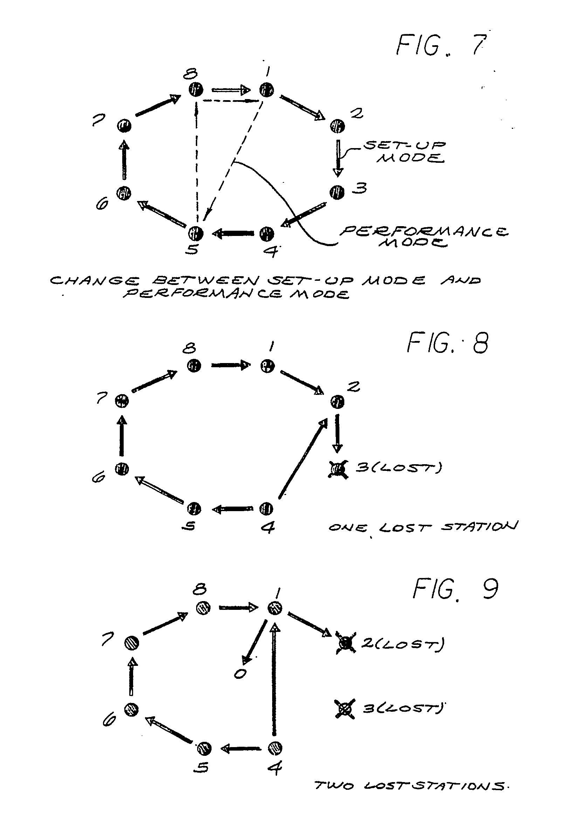

After the vector has been passed from a station in the sequence to the next station in the sequence, (e.g. from station 8 to station 9 in Figure 3), the station (e.g. station 9) receiving the vector communicates certain information in the portion of each communication designated as "Packet Data". This portion of the communication follows the portion of the communication identified as "Packet Type" information in the "Packet Data". For example, it provides information designated as "pmi" in Figures 1 and 1A. This identifies whether the station (e.g. station 9) receiving the vector will be one of the active stations in the sequence at level "pmi", when the level "pmi" should become active. It also identifies, as by the designation "pma" in Figures 1 and 1A, the mode (or hierarchy) of the ring in which the different stations are currently operating. For example, as shown in Figure 6, a set-up mode may be used while the sounds from the instruments at the different stations are being blended and shaped by the data transmitted between stations. A performance mode may be used after the sounds of the instruments at the different stations have been blended and shaped and the performance is about to begin. Generally, the number of stations in the performance mode is less than the number of stations in the set-up mode. The "pma" code identifies the particular mode in which the station (e.g. station 9) passing the vector is operating.

It will be appreciated that the "pmi" and "pma" codes appear in the "Data Packet" when one station communicates a vector to all of the other stations but identifies in the vector packet that a particular one of the stations is to receive the vector. It will also be appreciated that there may be more than two (2) modes without departing from the scope of the invention. For example, sixteen (16) different modes may be provided through the use of four (4) binary bits having individual patterns of operation to represent the different modes. It will be further appreciated that a transition can be made from any of the modes to any other one of the modes by selecting individual patterns for the four (4) binary bits.

After the communication of the "Packet Data", a plurality of bits are generated in each packet. These bits are indicated in Figure 1 by the portion of the packet designated as "Cycle Redundancy Sum" and are illustratively identified in Figure 1 as "cccc". These bits are used to check the bits previously generated in each packet and indicate from such check whether all of the bits required to be generated in each of the previous portions of the packet have been properly generated. A cycle redundancy verify to check the proper generation of the previous bits is well known in the art.

Each packet includes a flag at the end of the packet. This flag may include a plurality of bits in a particular format. This format may illustratively constitute a sequence of six (6) binary 1's. The flag at the end of the packet indicates that the generation of the packet has been completed. To separate the generation of successive packets, an idle period is imposed after each such generation. This idle period insures that the generation and processing of information in each packet will be separate from the generation and processing of information in other packets so that there will be no interference or conglomeration between the information in different packets. This idle period may be represented by the generation of a plurality of bits in a particular format. For example, the idle period may be represented by the generation of sixteen (16) successive binary 1's.

Figure 2 indicates the generation of successive packets and the significance of such successive generations. As previously indicated, each packet is generated at a particular rate controlled by the station in the sequence with the slowest response time. The particular rate may also be dependent upon the length of the lines between the different stations in the sequence. This delay time may be quite long since one station in a sequence may illustratively be in Los Angeles and another station in the sequence may illustratively be in Kansas City. The time for the generation of each packet is designated as the "process delay time" and is identified as "pd" in such drawings as Figures 1, 1A and 2. The process delay time for the generation of each packet may illustratively be one hundred microseconds (100 $\mu$ sec.).

As shown in Figure 2, a station (e.g. station 8) may initiate the generation of a packet to another station (e.g. station 9) at zero process delay time (o pd). This packet may constitute the generation of data or the generation of a vector which may be broadly considered as one form of data. station 9 does not acknowledge the receipt of this packet until after a particular period of time such as one process delay time (1 pd). This acknowledgement is provided by the communication of a data packet by station 9 to another station, a group of stations or all of the stations in the sequence. This is indicated in Figure 2 by the designation "Vector/Data". This represents a period of two process delay time (2 pd) after station 8 has completed the transmission of the packet to station 9. The data packet may also constitute the transmission of a vector if station 9 does not have to, or does not wish to, transmit data to another station.

Each station identifies in a register the next station in a sequence. This register is identified in Figure 2A

EP 0 447 873 A2

as "NID" (meaning "Next Identification"). Furthermore, each station receiving a vector identifies the station passing the vector. This identification is made in a register identified in Figure 2A as "PID" (meaning "Previous Identification"). Each station also has a register identified in Figure 2A as "PNID". This indicates the next station in the sequence with an operation in the performance mode.

Figure 3 indicates a plurality of stations in a set-up mode. These stations illustratively include stations 8, 9, 10, 11, 12, n-1 and n. The stations are in the set-up mode to make certain that the stations are all operating properly. The stations are also often in the set-up mode to provide for a processing of the data, such as data representing sounds from the different stations to blend and shape such sounds.

It will be appreciated that each station (e.g. station 8) in the set-up mode provides for the passing of the vector to the next station (e.g. station 9) in the set-up mode in Figure 3. The provision for the passing of the vector is indicated at "FF" in the address in Figure 1 and the station receiving the vector is generally identified by the designation "nn" following the code "FF" for the provision of the passaging of the vector.

After receiving the vector, each station in Figure 3 is also able to transmit a "data packet" to any other individual station in the sequence. The address portion of the data packet in Figure 1 indicates the station or station receiving such data packet. The designation "nn" following the designation "FE" in Figure 1 indicates on a general basis the particular station to which the data packet is being communicated. Alternatively, each station receiving the vector is able to communicate a data packet to a selective group of stations in the sequence. For example, station 8 may communicate a data packet to all of the stations where a guitar is located. This is indicated at "gggg" in Figure 1. As a further alternative, each station may communicate a data packet to all of the other stations in the sequence. This is indicated at "FFFF" in Figure 1. This is designated as a "broadcast" mode.

When a station (e.g. station 12) individually receives a data packet from a communicating station (e.g. station 8), it responds after a particular period such as one process delay time (1 pd). This response from station 12 acknowledges to station 8 that it has received the data packet. The acknowledgement of the receipt of a data packet by a receiving station (e.g. station 12) to a communicating station (e.g. station 8) is indicated in Figure 1 by a designation such as "FD" in the address portion of the packet transmitted by station 12 to station 8. This is followed in the Address by bits (generally designated as nn in Figure 1) identifying the station 8.

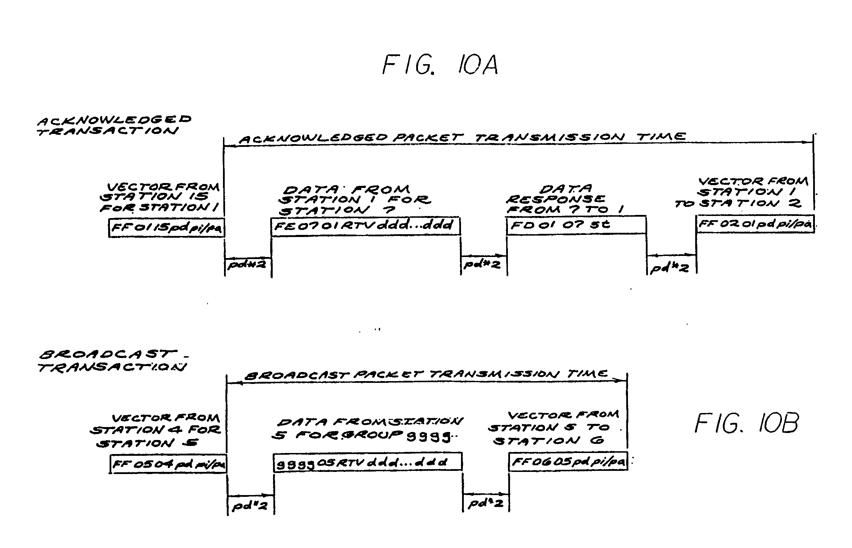

An example of the acknowledgement of a communication of a data packet is also indicated in Figure 10A. In Figure 10A, a vector passes from station 15 to station 1. After a delay of two process delay times (2 pd), station 1 communicates a data packet individually to station 7. After an additional delay of two process delay times (2 pd), station 7 acknowledges to station 1 that it has received the data packet from station 1. Two process delay times (2 pd) later, station 1 provides for the passing of the vector to station 2.

Figure 10B illustrates the multicast of a data packet from a station to a specialized group of stations designated as stations gggg and the time sequence involved in such a broadcast. In Figure 10B, a vector passes from station 4 to station 5. After a delay of two process delay times (2 pd), station 5 communicates a data packet to the stations in the selected group gggg. As previously described, the selected group may be illustratively be those stations having a guitar located at the stations. Since a group of stations is involved and particularly since the group may be large, the stations in the group gggg do not acknowledge to station 5 that they have received the data packet from station 5. Instead, after an additional period such as one process delay time (1 pd), station 5 provides for the passing of the vector to station 6.

As previously indicated, a communicating station may sometimes broadcast a data packet to all of the other stations in a sequence. Under such circumstances, the stations receiving the vector do not communicate to the communicating station that they have received the data packet. Instead, after an additional delay period such as one process delay time (1 pd), the communicating station provides for the passage of the vector to the next station in the sequence.

Figure 3 indicates a group of stations 8, 9, 10, 11, 12, n-1 and n operative in a set-up mode. This is indicated in Figure 3 by solid lines extending between successive pairs of stations in the sequence constituting the set-up mode. Figure 3 also indicates a group of stations operative in the performance mode. Since the performance mode is generally at a higher level than the set-up mode, not all of the stations in the set-up mode are included in the performance mode. The stations in the performance mode in Figure 3 constitute stations 8, 10 and n-1. The stations in the performance mode are indicated in Figure 3 by broken lines extending between the stations. As described previously and will be as described in detail subsequently, operations may be provided in the set-up mode and in the performance mode at different times.

Figure 4 also illustrates, by single lines between stations, the stations operating in the set-up mode and further illustrates, by double lines, the stations operating in the performance mode. Assume for the subsequent discussion in this paragraph and the following paragraphs that the stations in Figure 4 are operating in the performance mode. These stations constitute stations 8, 10 and n-1. When the vector has

8

passed to station 10 and station 10 has communicated a data packet to one or both of the other stations in the performance mode, station 10 then provides for the passing of the vector to station n-1. Station n-1 would normally communicate a data packet to another station, as other stations, in the sequence after two process delay times (2 pd) discussed above (and as shown in Figure 2 by the indication "vector/data" at 2 pd). However, after one process delay time (1 pd), any station between station 10 and station n-1 has the right to send a data packet that it wishes to be spliced into the sequence. This time splice is indicated in Figure 2 by the word "splice" adjacent the time delay indicated at one process delay time (1 pd). The splicing station directs a splice packet to station 10 to cause station 10 to modify its next identification (NID) station information to specify such splicing station.

In the example shown in Figures 4 and 4A, station 11 provides a communication after one process delay time (1 pd) that it wishes to be spliced into the sequence. Furthermore, in the example shown in Figure 4A, station 11 communicates a data packet to a special group of stations, such as stations "gggg", with individual characteristics common to the group. Station 11 then provides for the passing of the vector to station n-1. Thereafter station 11 is included in the performance mode. As a result, station 10 thereafter provides for the passing of the vector to station 11 and station 11 provides for the passing of the vector to station n-1. This is indicated in Figure 4 by a broken line extending between stations 10 and 11 and by another broken line extending between stations 11 and n-1.

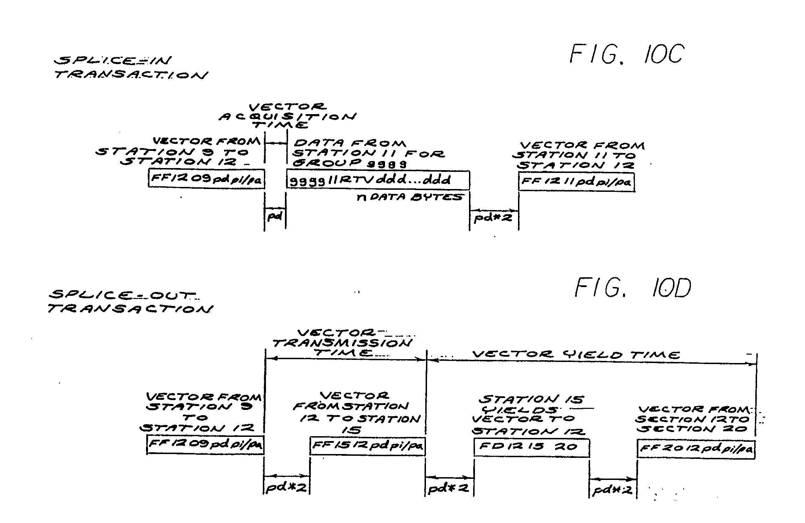

Figure 10C illustrates another example of a splice-in transaction and further illustrates the time sequence for this transaction. In the splice-in transaction of Figure 10C, station 9 provides for the passing of the vector to station 12. After one process delay time (1 pd), station 11 sends a data packet to a special group of stations gggg having common characteristics different from the other stations in the sequence. This data packet consists of a Real Time Vector of n data bytes designated as "ddd...ddd". After two (2) additional process delay times (2 pd), station 11 provides for the passing of the vector to station 12. Station 11 is thereafter spliced into the station. Station 11 accordingly receives the vector from station 8 and station 12 subsequently receives the vector from station 11.

Figures 5 and 5A illustrate an example where a station is spliced out of a sequence by a voluntary and positive action of that station. In the example shown in Figure 5, stations 8, 9, 10, 11, 12, n-1, n and 20 are shown by single lines between pairs of successive stations as constituting a sequence in the set-up mode. Stations 8, 10, 12 and n are shown by double lines in Figure 5 as constituting a sequence in the performance mode. The line between stations 10 and 12 in this sequence is shown in broken lines since station 12 is to be voluntarily and positively spliced out of the system. For the purposes of the example in Figures 5 and 5A, assume that the stations are in the performance mode, that the vector has passed to station 8 and that station 8 provides for the passing of the vector to station 10. Assume also that station 10 does not wish to be included any longer in the sequence constituting the performance mode.

When station 10 receives the vector in the example shown in Figures 5 and 5A, it sends a data packet back to that it no longer wishes to be included in the performance mode sequence. This data packet further indicates that station 8 should subsequently provide for the passing of the vector to station 12. Station 8 than provides for the passing of the vector to station 12 and station 12 accepts the vector from station 8 by communicating a data packet to another station. The performance mode sequence then consists of stations 8, 12 and n, as indicated by the double lines between stations 12 and n and between stations n and 8 and as indicated by the single line between stations 8 and 12.

An example of a splice-out transaction is also shown in Figure 10D, which also shows the time sequence for the transaction. In Figure 10D, station 12 initially receives the vector from from station 9. Station 12 then attempts to provide for the passing of the vector to station 15 after two process delay times (2 pd). After two additional (2) process delay times, station 15 communicates a data packet that station 12 should provide for the passing of the vector to station 20. After two further process delay times (2 pd), station 20 accepts the vector from station 20 by communicating a data packet to another station.

It may sometimes happen that a station is lost from the sequence. This is illustrated in the example shown in Figure 8. In the example shown in Figure 8, a sequence intially consists of stations 1, 2, 3, 4, 5, 6, 7 and 8. When the vector passes from station 1 to station 2, station 2 communicates a data packet to one or more of the other stations in the sequence and then attempts to provide for the passing of the vector to station 3. However, for one reason or another, station 3 may be temporarily or permanently out of the sequence. For example, the power to station 3 may be temporarily interrupted or there may be a malfunction of equipment at station 3.

As shown in Figure 2, station 3 would normally respond, after two process delay times (2 pd) from the passage of the vector from station 2, by communicating a data packet to another station or passing the vector. Since station 3 is incapable of communicating a data packet to another station because of a power loss or a malfunction, station 3 does not provide such a communication. Station 2 then provides for the passing of the vector again to station 3 after an additional period of two process delay times (2 pd).

If station 3 does not respond after such additional period of two (2) process delay times, station 2 again provides for the passing of the vector to station 3 for a third (3rd) time. If station 3 does not respond within two (2) process delay times from the third (3d) communication of the vector from station 2, station 4 may communicate a data packet that station 2 should pass the vector to station 4. Station 2 then splices station 3 out of the sequence and provides for the passing of the vector to station 4. Thus, after a total period of eight (8) process delay times (6 pd), station 4 communicates a data packet to another station. When station 2 thereafter splices station 3 out of the sequence, the system in Figure 8 includes stations 2, 4, 5, 6, 7 and 8.

It may occasionally happen that two (2) or more successive stations in a sequence are involuntarily lost temporarily or permanently from a sequence. For example, some one may have involuntarily or inadvertently opened a master switch controlling the operation of more than one successive station in a sequence. An example of this is shown in Figure 9 where stations 3 and 4 are temporarily or permanently lost from a sequence initially consisting of stations 1, 2, 3, 4, 5, 6, 7 and 8. If the example of Figure 9 corresponded to the example of Figure 8, station 3 would communicate with station 1 after station 1 attempted to provide for the passing of the vector to station 2 for three (3) successive periods each of two process delay times (2 pd) and station 2 failed to respond upon the third (3d) passage of the vector from station 1. However, in the example shown in Figure 9, station 3 is also lost from the sequence so that it cannot respond upon the third (3d) attempt by station 1 to provide for the passing of the vector.

Since neither station 2 nor station 3 has responded to the attempt by station 1 to provide for the passing of the vector in three (3) successive attempts, station 1 now attempts to provide for the passing of the vector to an imaginary station which may be considered as station "0". Station 1 does this by setting the identification of the next station in the sequence to zero (0). Every time that station 1 attempts to pass the vector to station 0, the other stations in the sequence decrement their identification by one integer in a register associated with such station. This register is identified in Figure 2A as "SNR", meaning "Station Number Relative".

The SNR register indicates the difference between the identification of the station providing for the passing of the vector anywhere and the identification of the station receiving this vector. For example, in the first attempt by station 1 to provide for the passing of the vector to station 0, station 4 decrements its Station Number Relative by one (1) integer from a value of 4 - 1 = 3 to a value of 3 - 1 = 2 so that its identification is now "2".

When station 1 has attempted two (2) successive times to provide for the passing of the vector to station 0, the identification of station 4 in the SNR register is now "1" to indicate that it is the station next to station 1 in the sequence. Station 4 now communicates with station 1 to indicate that station 1 should splice station 4 into the sequence as the next station in the sequence and should pass the vector to station 4. Station 1 then provides for the passing of the vector to station 4 and the sequence in Figure 9 then constitutes stations 1, 4, 5, 6, 7 and 8.

Figure 10E illustrates another example of the loss of a station and also indicates the time periods involved in the recovery of the system from the loss of such station. In Figure 10E, station 9 provides for the passing of a vector to station 12, provides for the passing of a vector to station 12 a second time after the failure of station 12 to respond within a period of two process delay times (2 pd) and provides for a passing of a vector to station 12 a third time after a failure of station 12 to respond within a period of two process delay times (2 pd) to the third attempt by station 9. Station 9 then provides for the passing of a vector to imaginary station 0 to issue an invitation to the other stations in the sequence to become spliced to station 9.

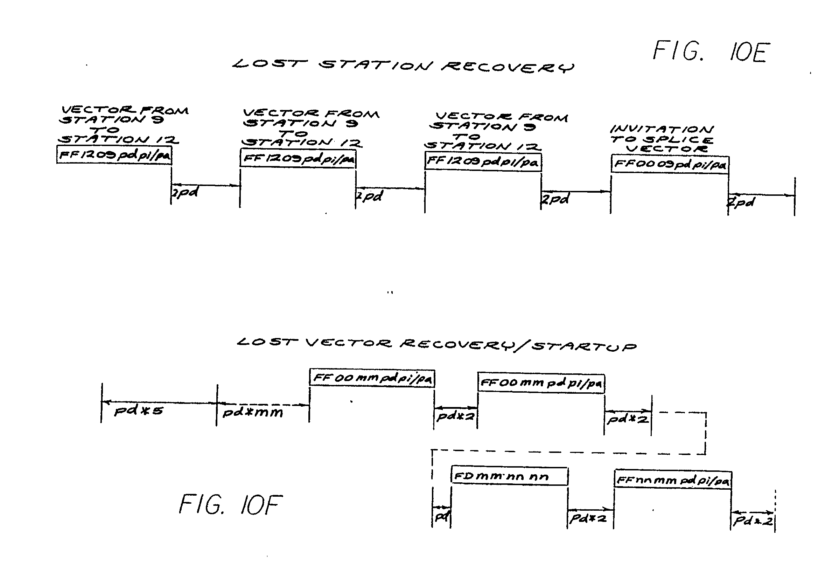

Figure 10F also illustrates the time sequence for the successive operations in the "Lost Station Recovery" mode. In the embodiment shown in Figure 10F, station mm attempts to provide for the passing of the vector to the next station in the sequence. After two (2) process delay times, station mm again attempts to provide for the passing of the vector to such next station in the sequence. After two (2) additional process delay times (2 pd), station mm again attempts to provide for the passing of the vector to the next station in the sequence. This is indicated schematically in Figure 10F. After an additional period of two process delay times (2 pd) with no response from any other stations, station mm attempts to provide for the passing of the vector to imaginary station 0.

After each attempt by station mm to to provide for the passing of the vector to imaginary station 0 in Figure 10F, the registers in the stations (other than station mm) still in the sequence are decremented by an integer. Assume that, of the stations still in the sequence, station nn is the station next to station mm. When the count in the SNR register in station nn has been decremented to a value of "1", station nn sends an invitation to station mm in Figure 10F to splice station nn into the sequence. Upon receiving this invitation to splice, station mm splices station nn into the sequence and provides for the passing of the vector to station nn.

Figure 10F also illustrates how the system of this invention operates when the system is just starting to operate in the "power-up" mode or when all of the stations have been temporarily or permanently lost from the system. Under such circumstances, all of the stations attempt simultaneously to provide for the passing of the vector to station 0. All of the stations have an individual process delay time (pd) different from those of the other stations. This will cause the station with the shortest process delay time (pd) to assume control over the operation of the system.

Assume that station 1 has the shortest process delay time (pd). This will cause station 1 to provide for the passing of the vector to station 0 before any other station. Station 2 will accordingly decrement its count relative to station 1 by an integer and to communicate a splice packet to station 1. Station 1 accordingly splices station 2 into the sequence. Station 2 now provides for the passing of the vector to imaginary station 0 and every station except stations 1 and 2 decrements its count by an integer. The count in station 3 accordingly becomes decremented to a value where station 3 sends a splice package to station 2 and station 2 splices station 3 into the sequence. This continues until all of the stations have been progressively spliced into the sequence.

As previously described, a designation of "pmi" (representing "Performance Master Indicator") in the "Packet Data" portion of a packet for a station indicates whether such station will be an active station in a sequence. As previously indicated, the stations are capable of operating in different modes such as a set-up mode or a performance mode. A designation of "pma" (representing "Performance Mode Active") in the "Packet Data" portion of a packet for a station indicates the hierarchy of the operational mode which is currently involved.

In the set-up mode, all of the stations participate in the sequence regardless of their "Performance Master Indicator" (pmi). In the Performance Mode, only the stations with pmi indications are included in the sequence. As shown in Figure 6, not all of the stations in the set-up mode are necessarily included in the performance mode since the performance mode is at a higher level than the set-up mode.

Assume that the stations in a sequence are operating in the set-up mode. In order to ascend to the performance mode, any station in the set-up mode can communicate that the performance mode should be activated. However, in order to do this, such station has to pass a vector with the desired "pma" designation in the "Packet Data" portion of the vector packet. Such station can then convert the operation to the performance mode by including this value as the "pma" value in the next vector it transmits. The stations then operate in the performance mode.

For example, in Figure 7, stations 1, 2, 3, 4, 5, 6, 7 and 8 are in the set-up mode (as indicated by solid wide lines between the stations) but only stations 1, 5 and 8 are in the performance mode (as indicated by broken lines between the stations). A register shown in Figure 2A as "PNID" (meaning Next performance Identification") is provided for each individual one of the stations in the performance mode to indicate the next station in the performance mode - i.e., the station to which each individual station provides for the passing of the vector in the performance mode.

When the stations (such as stations 1, 5 and 8) in Figure 7 are operating in the performance mode, other individual stations with an occasional need to send information may include a pma designation in the "Packet Data" portion of a packet. This allows such individual stations to enter into the sequence of the performance mode when the stations in the performance mode have sequenced to a position where such individual stations can be spliced into the sequence. When such individual stations have completed the communication of information to another station, or other stations, in the sequence, they operate to splice themselves out of the sequence in the manner shown in Figure 5 and discussed above.

In order for the stations (such as the stations 1, 5 and 8 in Figure 7) to continue to operate in the performance mode in successive cycles of operation, one of the stations has to indicate on a positive basis in each such cycle that it desires to continue the operation of the sequence in the performance mode. One of the stations does this by communicating a pmi indication to the other stations in the sequence. If none of the stations in the sequence sends a pma communication in a cycle of operation, the sequence reverts to the set-up mode.

The system disclosed above has certain important advantages. These advantages provide the systems of this invention with a considerably enhanced flexibility in the operation of the system in comparison to the system of the prior art. For example, the system of this invention can adjust the stations in a sequence to splice stations into, or splice stations out of, the sequence without affecting the operation of the system. The system of this invention provides these station adjustments or flexibilities in such a way that the system continues to operate without any noticeable interruptions in the operation of the system. When the system is operating to generate data relating to music, this is important in insuring that the listener will continue to hear the music without any noticeable pause or interruption.

The adjustment in the operation of the system of this invention without affecting or interrupting the operation of the sequence may be seen from the following different examples:

1. Any station not in a sequence may splice itself into the sequence. Furthermore, this splicing occurs at a proper time in the sequence depending upon the position of the station in the sequence.

2. Any station may splice itself out of a sequence. Furthermore, such splicing occurs at a proper time in the sequence depending upon the position of the station in the sequence.

3. Any station may be spliced out of a sequence if it does not accept the vector from a previous station in the sequence within a predetermined time. Furthermore, such splicing occurs at a proper time in the sequence depending upon the position of the station in the sequence.

The system of this invention also has other important advantages. For example, it is able to provide a selective communication between stations. This may be seen from the following:

1. A station receiving the vector is able to communicate a data packet to any of the other stations in a sequence.

2. A station receiving the vector is able to communicate a data packet to any selected group of stations in a sequence.

3. A station receiving the vector is able to broadcast a data packet to all of the other stations in a sequence.

In all of the above communcations, the operation of the system is not affected.

The system of this invention is also advantageous under conditions which would be considered as catastrophic in the systems of the prior art. For example, even when two (2) or more successive stations are lost from a sequence, the system of this invention is able to patch the system without affecting or interrupting the oeration of the system.

The system of this invention also follows the same procedure as discussed in the previous paragraph when power is first applied to the system. In this way, the system is able to become automatically operative when power is first applied to the system. Furthermore, the system is able to become operative in a minimal period of time and in a proper succession of stations under such circumstances.

The system of this invention is also able to become converted (or switched) automatically between different modes of operation without any noticeable interruption in the operation of the system. For example, the system is able to become converted from a set-up mode to a performance mode without any interruption in the operation of the system. The system is also able to operate in the performance mode for any desired period of time and to revert to the set-up mode whenever it is no longer desired to operate the system in the performance mode.

The program for operating the system of this invention is shown in Exhibit A, which is attached to this specification and is considered as forming a part of this specification. Applicant believes that a person of ordinary skill in the art will be able to understand this program without further explanation, particularly in view of the above description of the construction and operation of the system of this invention.

Although this invention has been disclosed and illustrated with reference to particular embodiments, the principles involved are susceptible for use in numerous other skilled in the art. The invention is, therefore, to be limited only as indicated by the scope of the appended claims.

```
MEDIALNK.ASM                    PAGE 1  Thu Feb 22 10:27:11 1990

1: $DEFAULT PW=132
2: ;***********************************************************************
3: ;
4: ;        Project:        MidiTap
5: ;
6: ;        File:   MEDIALNK.ASM
7: ;
8: ;        Copyright (C) 1989 by Lone Wolf, Inc.
9: ;        All rights reserved.
10: ;
11: ;        Author: Tim Tuttle (TT)
12: ;
13: ;        Description
14: ;
15: ;        The code module contains method and direct
16: ;        function implementations, private macros, private data,
17: ;        and method table over-ride functions. Method, override, and
18: ;        object data structure definitions should be made in the
19: ;        .INC file, located in INCLUDE for export to users
20: ;        of this module.
21: ;
22: ;***********************************************************************
23: ;***********************************************************************
24: ;
25: ;        Date\Author     Change comments
26: ;        -----------     ---------------
27: ;
28: ;        TT 11/15/89     new back to back fiber echo
29: ;        DJW 11/17/89    fixed MdiPPak/PakPBuilder interaction
30: ;        TT 11/20/89     return correct status to remote on pool empty
31: ;        DJW 11/26/89    rearrange tx fiber enable
32: ;        TT 11/29/89     add pak sequence number to preamble
33: ;        TT 12/1/89      delete lnkCBAUDValue and only allow 2 MHz on link
34: ;        DJW 12/3/89     to VECTOR on lnkEOMTimeout
35: ;        TT 12/5/89      disable DMA in Tx setup sequence
36: ;        TT 12/14/89     just zero PakBuilder once
37: ;        TT 12/14/89     check link idle at CT Timeout
38: ;        TT 12/18/89     back to 7+2 PD on long timeout
39: ;        TT 12/19/89     fix LnkPDA equate
40: ;        TT 12/27/89     redo Group ID table search
41: ;        TT 12/27/89     move Group ID Table routines to Lnk
42: ;        TT 12/27/89     add Group ID Table subroutines
43: ;        TT 12/29/89     DEBUG CODE TO CHECK GROUP TABLE
44: ;        TT 12/29/89     MALL
45: ;        TT 12/29/89     queue broadcast or group after TxEOM
46: ;        TT 1/8/90       after EOM timeout goto lnkRESP
47: ;        TT 1/12/90      delete group tests
48: ;        DJW 1/17/90     clear LID in Vect2
49: ;        TT 1/22/90      clear SysNodeID if conflict detected
50: ;        TT 1/24/90      setup configurable fiber modes
51: ;        TT 1/25/90      move node id conflict reset code to task
52: ;        TT 1/27/90      fix splicepak pointer
53: ;        TT 1/27/90      move lnkSPLICE entry point
54: ;        TT 1/27/90      move ctdelay in lnkRxSplice
55: ;        TT 1/27/90      make sure vectors have sysnodeid set
56: ;        TT 1/29/90      if DID=0 then stick with VECTOR
```

EXHIBIT A

```
MEDIALNK.ASM                       PAGE 2   Thu Feb 22 10:27:11 1990

57: ;        TT 1/29/90      check for SID<MID<DID and DID<SID<MID for splice
58: ;        TT 1/29/90      delete vector table and add more NID comps
59: ;        TT 1/30/90      redo jump table for Rx packets
60: ;        TT 1/30/90      delete search thru Rx dscc fifo on RxEOM
61: ;        TT 2/1/90       refix CTdelay in RxResponse
62: ;        DJW 2/1/90      delete hub stub
63: ;        TT 2/2/90       delete LnkResetFlag and add SysReset Flag and reZip
64: ;        TT 2/2/90       delete page0.inc
65: ;        TT 2/2/90       TxRxDisable speedup
66: ;        TT 2/2/90       redo splice spd logic
67: ;        TT 2/5/90       LnkActive on every vector Rxed
68: ;        TT 2/5/90       begin spliceout logic
69: ;        TT 2/6/90       LnkActive on vectEOM and Rx vector
70: ;        TT 2/6/90       do not start link if in stand alone mode
71: ;        TT 2/7/90       stay with VECTOR if DID = MID in VectEOM
72: ;        TT 2/7/90       make sure last in ring checks for data
73: ;        TT 2/9/90       reZip if SLAVE timeout or LID problem
74: ;        TT 2/9/90       redo LID logic
75: ;        rss 2/10/90     debug screen labels added
76: ;        DJW 2/11/90     do not clear LID in VECT2 if LID ne MID
77: ;
78: ;*********************lastmod** DJW  2/17/90   17:57:22  ***************
79:
80: #define          MODULE  MEDIALNK
81:
82: #include         <sysmacs.inc>
83: #include         <system.inc>
84:
85:         startModule MEDIALNK,   ; generates standard assembler directives
86:                                 ; Causes assembly of MEDIALNK.INC to also generate
87:                                 ; EEROM data for class initialization.
88:
89: #include         <MEDIALNK.inc>
90:
91: ;       include other module export files here for
92: ;       those modules whose services you will be using
93:
94: #include         <sysreg.inc>
95: #include         <task.inc>
96: #include         <packet.inc>
97: #include         <utils.inc>
98: #include         <memory.inc>
99: #include         <midiin.inc>
100: #include        <port.inc>
101: #include        <config.inc>
102:
103:
104:
105: *
106: *       DISABLE Tx AND Rx
107: *
108: TxRxDisable %macro
109:
110:         LDAA    LnkRxFiberMode              ; fiber to remote reflect mode
111:         STAA    OUTCFG
112:
```

EP 0 447 873 A2

```
MEDIALNK.ASM                    PAGE 3  Thu Feb 22 10:27:11 1990

113:        LDAA    #RxRes                  ; RESET Rx
114:        STAA    CCR+LinkA
115:
116:        CLRA
117:
118:        STAA    CCR+LinkA               ; RESET Tx
119:
120:        STAA    CBAUD                   ; DISABLE Tx AND Rx MANCHESTER
121:
122:        LDAA    #1                      ; ENABLE Rx DMA
123:        STAA    DmaPri
124:
125:        %endm
126:
127:
128: *
129: *      ENABLE Rx
130: *
131: RxEnable %macro
132:
133:        LDX     #lnkRxEOM
134:        STX     SysIRQEOM
135:
136:        ldaa    #$0D                    ; READY TO Rx REMOTE
137:        staa    IER+LinkA               ; ready for action
138:
139:        LDAA    #RxMan                  ; ENABLE Rx MANCHESTER
140:        STAA    CBAUD
141:
142:        LDAA    #RxEna                  ; ENABLE Rx
143:        STAA    CCR+LinkA
144:                                        .
145:        %endm
146:
147: *
148: *      CHECK LINK AND GRAB IF IDLE
149: *
150: IdleCheck %macro
151:        %gensym IdleCheck10
152:
153:        LDAB    #TxMan+RxMan            ; setup to ENABLE Tx AND Rx MANCHESTER
154:
155:        LDAA    ICTSR+LinkA            ; READ DUSCC CONTROL STATUS
156:        BITA    #$08                    ; DCD HI
157:        BEQ     IdleCheck10            ; NO - GRAB LINK
158:
159:        JMP     lnkDmaBusy             ; YES - WAIT TILL FRAME FINISHED
160:
161: IdleCheck10
162:
163:        LDAA    LnkTxFiberMode         ; fiber to Tx mode
164:        STAA    OUTCFG
165:
166:        STAB    CBAUD                   ; ENABLE Tx AND Rx Manchester
167:
168:        LDAA    #$02                    ; ENABLE Tx DMA
```

15

```
MEDIALNK.ASM                  PAGE 4   Thu Feb 22 10:27:11 1990

169:         STAA    DmaPri
170:
171:                 .
172:         %endm
173:
174:
175:
176: *
177: *    EXTRACT Rx STATUS FROM DUSCC FIFO AFTER EOM INTERRUPT
178: *
179: StatusCheck %macro
180:         %gensym lnkEOMStatus
181:         %gensym lnkEOMStatus10
182:         CTStop                              ; DISABLE CT
183: lnkEOMStatus
184:         LDAB    RSR+LinkA                   ; READ DUSCC STATUS
185:         ANDB    #$42                        ; CHECK FOR ERRORS
186:         BNE     lnkEOMStatus10
187:         LDAA    RxFIFO+LinkA                ; EMPTY Rx DUSCC FIFO
188:         LDAA    GSR+LinkA                   ; SEE IF MORE IN FIFO
189:         BITA    #ARx                        ; MORE IN FIFO?
190:         BNE     lnkEOMStatus                ; YES - EMPTY FIFO
191: lnkEOMStatus10
192:         %endm
193:
194:
195:
196: CollisionDebug %macro
197:         extern  RxErrorCount(page0)
198:         inc     RxErrorCount    ; DEBUG!!!!!
199:         extern  RxErrorStatus(page0)
200:         stab    RxErrorStatus
201:         %endm
202:
203:
204:
205: RxNewPak %macro
206: *
207: *    GET A Pak FROM THE PakPool AND SETUP Rx BACKUP BUFFER PARAMS
208: *
209:         %gensym RxNewPak10
210:         ldy     PakPoolHead                 ; get next buffer pointer
211:         bne     RxNewPak10                  ; pool not empty
212:
213:
214:         ldd     #$baff          ; DEBUG
215:         jsr     sysErr          ; DEBUG
216:
217:
218: RxNewPak10
219:         ldx     0,y                         ; thread to next buffer in pool
220:         stx     PakPoolHead                 ; update pool head pointer
221:         dec     PakPoolCnt                  ; count down pool level
222:         clr     0,y                         ; clear next pointer
223:         clr     1,y
224:         STY     LnkPRxTskBak                ; SAVE Rx Tsk POINTER
```

```
225:
226:        LDX    PakPData,Y          ; EXTRACT DATA ADRS
227:        STX    LnkPRxDataBak       ; SAVE IN DIRECT ADRS FOR SPEED
228:        %endm
229:
230:
231: *
232: *    QUEUE PACKET IN TASK QUEUE
233: *
234: QueFkt %macro
235:
236:        LDX    PakPQOUT            ; GET POINTER TO Tx Tsk
237:        LDX    0,X                 ; FROM Pak Que
238:        INC    PakPQOUT+1          ; DEQUE Tx Tsk
239:        INC    PakPQOUT+1
240:
241:        LDY    TskPTos,X           ; EXTRACT STACK POINTER
242:        STAA   TskStkA,Y           ; STATUS TO Tsk
243:
244: *
245: *    QUEUE Tsk IN TASK Q
246: *
247:        tskQAdd
248:
249:        LDAA   #LnkRetries         ; INIT RETRY COUNT
250:        STAA   LnkRetryCount
251:
252:        INC    LnkTxSequence       ; BUMP Tx SEQUENCE NUMBER
253:
254:        %endm
255:
256:
257: *
258: *    STOP COUNTER/TIMER
259: *
260:
261: CTStop %macro
262:        LDAA   #CTDis               ; DISABLE SELF
263:        STAA   CCR+LinkA
264:        %endm
265:
266:
267:
268: *
269: *    CTDelay1  SETS 1 PDA DELAY TIMER
270: *
271: CTDelay1 %macro
272:
273:        LDAA   #CTClr              ; CLEAR CT INTERRUPT FLAG
274:        STAA   ICTSR+LinkA
275:
276:        LDX    LnkDelay1           ; 1 PDA DELAY
277:        STX    CTPRH+LinkA
278:
279:        LDAA   #CTPre              ; PRESET COUNTER TIMER
280:        STAA   LinkA+CCR
```

```
281:
282:        LDAA    #CTEna              ; ENABLE TIMER
283:        STAA    LinkA+CCR
284:
285:        %endm
286:
287:
288: *
289: *      CTDelay2  SETS 2 PDA DELAY TIMER
290: *
291: CTDelay2 %macro
292:
293:        LDAA    #CTClr              ; CLEAR CT INTERRUPT FLAG
294:        STAA    ICTSR+LinkA
295:
296:        LDX     LnkDelay2           ; 2 PDA DELAY
297:        STX     CTPRH+LinkA
298:
299:        LDAA    #CTPre              ; PRESET COUNTER TIMER
300:        STAA    LinkA+CCR
301:
302:        LDAA    #CTEna              ; ENABLE TIMER
303:        STAA    LinkA+CCR
304:
305:        %endm
306:
307:
308:
309: *
310: *      CTDelay3  SETS 3 PDA DELAY TIMER
311: *
312: CTDelay3 %macro
313:
314:        LDAA    #CTClr              ; CLEAR CT INTERRUPT FLAG
315:        STAA    ICTSR+LinkA
316:
317:        LDX     LnkDelay3           ; 3 PDA DELAY
318:        STA     CTPRH+LinkA
319:
320:        LDAA    #CTPre              ; PRESET COUNTER TIMER
321:        STAA    LinkA+CCR
322:
323:        LDAA    #CTEna              ; ENABLE TIMER
324:        STAA    LinkA+CCR
325:
326:        %endm
327:
328: *
329: *      CTDelay4  SETS 4 PDA DELAY TIMER
330: *
331: CTDelay4 %macro
332:
333:        LDAA    #CTClr              ; CLEAR CT INTERRUPT FLAG
334:        STAA    ICTSR+LinkA
335:
336:        LDX     LnkDelay4           ; 4 PDA DELAY
```

```
MEDIALNK.ASM                    PAGE 7  Thu Feb 22 10:27:11 1990

          STX    CTPRH+LinkA

          LDAA   #CTP.e                    ; PRESET COUNTER TIMER
          STAA   LinkA+CCR

          LDAA   #CTE-a                    ; ENABLE TIMER
          STAA   LinkA+CCR

          %endm



*
*       CTDelayLong SETS (7+2*NNR)*pda DELAY TIMER FROM LOOKUP TABLE
*
CTDelayLong %macro

          LDAA   #CTC.r                    ; CLEAR CT INTERRUPT FLAG
          STAA   ICTSR+LinkA

          LDX    #LnkDelayTable            ; GET PDA FROM TABLE USING NNR
          LDAB   LnkNNR
          LSLB

          ABX
          LDX    0,X                       ; EXTRACT PDA FROM TABLE

          STX    CTPRH+LinkA

          LDAA   #CTP-e                    ; PRESET COUNTER TIMER
          STAA   LinkA+CCR
                                           .
          LDAA   #CTEna                    ; ENABLE TIMER
          STAA   LinkA+CCR

          %endm



TableIndex  %macro   table,index
*
*       Index into table with index and return pointer in X
*
          ldx     #&table
          ldab    &index
          abx

          %endm




#ifdef  LNK
$ALLPUBLIC
#endif
```

```
393: ; **** DJW 2/10/90
394: ;
395: ;
396:        seg   _CODE
397:
398: LnkVectorPakLab   db    'vector', MENO
399:
400.
401:        DEFSEG   _LSTRINGS,CLASS=CODE
402:        SEG      _LSTRINGS
403:
404.        dw       LnkVectorPakLab
405.
406:        DEFSEG   _LVALUES,CLASS=CODE
407:        SEG      _LVALUES
408:
409:        dw       LnkVectorPak+1
410: ;
411: ;
412: ; **** DJW 2/10/90
413:
414: LnkRetries       EQU     -3              ; COUNT OF NO RESPONSE FROM DATA PACKET
415:
416: LnkNodeCount     EQU     16              ; COUNT OF LEGAL NODES IN SYSTEM
417:
418:
```

```
419: ;****************************************************************************
420: ;        private un-initialized data
421: ;****************************************************************************
422:        seg    _BSS
423:
424: *
425: *        CT DELAY VALUES COMPUTED FROM PDA
426: *
427: LnkDelay1        DS      2              ; 1 PDA
428: LnkDelay2        DS      2              ; 2 PDA
429: LnkDelay3        DS      2              ; 3 PDA
430: LnkDelay4        DS      2              ; 4 PDA
431:
432: LnkDelayTable    DS      2*LnkNodeCount ; LONG DELAY LOOKUP TABLE FOR 16 NODES
433:
434:
435: LnkPIDTable      DS      16             ; PREV ID TABLE
436: LnkNIDTable      DS      16             ; NEXT ID TABLE
437:
438:
439:
440: *
441: *        STATIC Tx VECTOR PACKET STRUCTURE
442: *
443:
444:
445:
446: LNK_VectorLth    EQU     7              ; LENGTH OF VECTOR PACKET
447:
448: LnkVectorPak
449: LnkvecID         DS      1              , PACKET ID
450: LnkvecDID        DS      1              ; DESTINATION ID
451: LnkvecSID        DS      1              ; SOURCE ID
452: LnkPDA           DS      1              ; ACTUAL PROCESSOR DELAY FACTOR
453: LnkPMA           DS      1              ; LINK PMA
454: LnkPMI           DS      1              ; LINK PMI
455: LnkLID           DS      1              ; LINK LID
456:
457:
458: *
459: *        Rx PACKET INDEX OFFSETS
460: *
461: LNK_ID           EQU     PAK_HdrID              ; PACKET ID
462: LNK_DID          EQU     PAK_HdrDID             ; DESTINATION ID
463: LNK_SID          EQU     PAK_HdrSID             ; SOURCE ID
464: LNK_SEQ          EQU     PAK_HdrSEQ             ; PAK SEQUENCE NUMBER
465: LNK_PDA          EQU     LnkPDA-LnkVectorPak    ; ACTUAL PROCESSOR DELAY FACTOR
466: LNK_PMA          EQU     LnkPMA-LnkVectorPak    ; LINK PMA
467: LNK_PMI          EQU     LnkPMI-LnkVectorPak    ; LINK PHI
468: LNK_LID          EQU     LnkLID-LnkVectorPak    ; LINK LID
469:
470: *
471: *        Tx SPLICE PACKET
472: *
473: LNK_SpliceLth    EQU     4              ; LENGTH OF SPLICE PACKET
474:
```

21

```
MEDIALNK.ASM                    PAGE 10  Thu Feb 22 10:27:11 1990

475: LnkSplicePak
476:
477: LnkSplID        DS      1               ; PACKET ID
478: LnkSplDID       DS      1               ; DESTINATION ID
479: LnkSplSID       DS      1               ; SOURCE (MY) ID
480: LnkSPD          DS      1               ; SPLICE DATA
481:
482:
483: *
484: *    Rx SPLICE PACKET INDEX OFFSETS
485: *
486: LNK_SPD         EQU     LnkSPD-LnkSplicePak  ; splice data
487:
488:
489: *
490: *    Tx RESPONSE PACKET
491: *
492: Lnk_ResponseLth EQU     5               ; LENGTH OF RESPONSE PACKET
493:
494: LnkResponsePak
495:
496: LnkResID        DS      1               ; PACKET ID
497: LnkResDID       DS      1               ; DESTINATION ID
498: LnkResSID       DS      1               ; SOURCE (MY) ID
499: LnkResSEQ       DS      1               ; SEQUENCE NUMBER OF DATA PACKET
500: LnkRSP          DS      1               ; RESPONSE STATUS
501:
502:
503: *
504: *    Rx RESPONSE PACKET INDEX OFFSETS
505: *
506: Lnk_RSP         EQU     LnkRSP-LnkResponsePak  ; response status
507:
508:
```

```
MEDIALNK.ASM                PAGE 11   Thu Feb 22 10:27:11 1990

509: ;**************************************************************
510: ;       class power-up initialization code (before tasks are running)
511: ;**************************************************************
512:        seg     _CODE
513:
514: MEDIALNK.init proc
515:
516:
517: *
518: *      FILL LnkGroupIDTable  WITH FF's
519: *
520:        ldab    #LnkGroupIDLength*LnkGroupIDCount ; length of ID table entry
521:        LDX     #LnkGroupIDTable            ; SETUP TABLE SEARCH
522:        LDAA    #MEMO
523: LnkGroupFill
524:        STAA    0,X
525:        INX
526:        DECB
527:        BNE     LnkGroupFill
528:
529:
530:
531: *
532: *      CONFIGURE DUSCC FOR FULL DUPLEX DMA
533: *
534:        LDY     #LinkA                     ; CONFIGURE LINK
535:        LDX     #iniSOPCfgTab              ; CONFIGURE TABLE ADRS
536:        JSR     utlDusccCfg                ; WRITE VALUES TO DUSCC
537:        CLR     IVR+LinkA                  ; SETUP DUSCC VECTOR
538:
539:        TxRxDisable                        ; make sure Manchesters are quiet
540:
541:        CTStop                             ; reset Counter/Timer
542:
543: *
544: *      NOW CONFIGURE DMA CHANNEL 1 FOR Tx OPERATION
545: *
546:        LDAA    #%00000101                 ; READ, CYCLE STEAL
547.        STAA    DmaStat1                   ; STATUS CHANNEL 1
548:
549: *
550: *      NOW CONFIGURE DMA CHANNEL 0 FOR Rx OPERATION
551: *
552:        LDAA    #%00000100                 ; WRITE, CYCLE STEAL
553:        STAA    DmaStat0                   ; STATUS CHANNEL 0
554:
555:        LDAA    #%00000000
556:        STAA    DmaInt                     ; INTERRUPT PRIORITY
557:
558:        LDAA    #08                        ; CONFIGURE CONTROL REGS
559:        STAA    DmaDCn                     ; DATA CHAIN
560:
561:        LDAA    #%00000001                 ; ENABLE CHANNEL 0 Rx
562:        STAA    DmaPri
563:
564:        rts
```

MEDIALNK.ASM                    PAGE 12  Thu Feb 22 10:27:11 1990

```
565:
566: *
567: *       LINK DUSCC CONFIGURATION TABLE
568: *
569: ini6DFC+gTab
570:        FCB     $00,FCR
571:        FCB     $00,CMR1              ; BOP PRIMARY MODE 8BIT ADR 8B CTL
572:        FCB     $10,CMR2             ; FULL DUPLEX DMA
573:        FCB     $03,TPR              ; 1 STOP BIT, 8 DATA BITS
574:        FCB     $80,TTR              ; TX=EXT CLK X1
575:        FCB     $03,RPR              ; 8 BIT RX CHAR
576:        FCB     $00,RTR              ; RX=EXT CLK X1
577:        FCB     $00,OMR
578:        FCB     $8A,CTCR             ; SETUP COUNTER TIMER FOR PCA
579:        FCB     $00,CTPRH            ; SET PRESCALE TO 0
580:        FCB     $FF,CTPRL            ; SCALE TO MAX
581:        FCB     0,-1                 ; END OF TABLE
582:
583: MEDIALNK.init endproc
584:
585:
586:
587:
588:
589:
590:
591:
```

MEDIALNK.A~M                    PAGE 13   Thu Feb 22 10:27:11 1990

```
592: ;*****************************************************************
593: ;        class start-up task code
594: ;*****************************************************************
595:
596: MEDIALNK.task proc
597:
598:          tst     CpuRxFiberMode          ; in stand alone mode?
599:          bpl     lnkTask10               ; no - start link
600:
601:          RTS                             ; yes - do not start link
602:
603: lnkTaskIn
604:
605:          SEI                             ; DO NOT LET LINK START TILL INIT DONE
606:
607:
608: *
609: *        SETUP STATIC LINK PACKETS
610: *
611:          LDAA    SysNodeID               ; MID = SYSNODEID
612:          STAA    LnkNNR                  ; INITIALIZE NNR
613: *
614: *        VECTOR PAK INIT
615: *
616:
617:          STAA    LNK_SID+LnkVectorPak    ; source (my) ID
618:
619:          LDAB    #LNK_VectorID           ; PACKET ID
620:          STAB    LNK_ID+LnkVectorPak
621:
622: *
623: *        SPLICE PAK INIT
624: *
625:          STAA    LNK_SID+LnkSplicePak    ; source (my) ID
626:
627:          LDAB    #LNK_SpliceID           ; SPLICE ID
628:          STAB    LNK_ID+LnkSplicePak
629:
630: *
631: *        RESPONSE PAK INIT
632: *
633:          STAA    LNK_SID+LnkResponsePak  ; source (my) ID
634:
635:          LDAB    #LNK_ResponseID         ; RESPONSE ID
636:          STAB    LNK_ID+LnkResponsePak
637:
638:          LDX     LnkPRxTsk               ; GOT A Pak ALREADY?
639:          BNE     lnkTaskIni10            ; YES - USE IT AGAIN
640:
641:          RxNewPak                        ; GET BACKUP Pak
642:
643:          STY     LnkPRxTsk               ; MOVE TO  PRIMARY POINTERS
644:          STX     LnkPRxData
645:
646:          RxNewPak                        ; GET BACKUP Pak
647:
```

```
MEDIALNK.ASM                    PAGE 14  Thu Feb 22 10:27:11 1990

648: LnkTaskInit10
649:
650:          LDAA    #LnkRetries              ; INIT RETRY COUNT
651:          STAA    LnkRetryCount
652:
653: *
654: *       INITIALIZE Tx AND Rx SEQUENCE NUMBERS
655: *
656:          LDD     #$00FF
657:          STD     LnkTxSequence
658:
659: *
660: *       INITIALIZE VECTOR TIMER
661: *
662:          STAB    LnkVectorTimer
663:
664: *
665: *       enable DUSCC interrupts
666: *
667:          LDAA    #$37                     ; SETUP INTERRUPTS - AND ENABLE COMPORT
668:
669:          STAA    ICR+LinkA
670:
671:          CTDelayLong                      ; START LONG TIMER
672:
673:          LDD     #PAK_BufLth               ; SETUP Rx DMA REGISTERS
674:          STD     DmaChuCnt
675:
676:          LDX     LnkPRxData
677:          STX     DmaCh0Data
678:
679:          RxEnable                         ; enable Rx DUSCC and Manchester
680:
681:          CLI
682:
683: *
684: *       COMPUTE PDA VALUES FROM PD
685: *
686:
687:          public  MEDIALNK.PDA
688:
689: MEDIALNK.PDA
690:
691:          CLRA
692:          LDAB    LnkPDA
693:
694:          STD     LnkDelay1
695:
696:          ADDD    LnkDelay1
697:          STD     LnkDelay2
698:
699:          ADDD    LnkDelay1
700:          STD     LnkDelay3
701:
702:          ADDD    LnkDelay1
703:          STD     LnkDelay4
```

26

```
MEDIALNK.ASM                    PAGE 15  Thu Feb 22 10:27:11 1990

704:
705:
706: *
707: *       NOW DO DELAY TABLE
708: *
709:         ADDD    LnkDelay3               ; GET 7 TIMES PD
710:
711:         LDX     #LnkDelayTable
712:         LDY     #LnkNodeCount           ; DO TABLE FOR 16 NODES NOW
713:
714: LnkPDAComp10
715:         STD     0,X
716:         ADDD    LnkDelay2
717:         INX
718:         INX
719:         DEY
720:         BNE     LnkPDAComp10
721:
722:         rts
723:
724: MEDIALNK.task endproc
725:


MEDIALNK.ASM                    PAGE 16  Thu Feb 22 10:27:11 1990

726: ;*******************************************************************
727: ;       class method and private function code
728: ;*******************************************************************
729:
730:


MEDIALNK.ASM                    PAGE 17  Thu Feb 22 10:27:11 1990

731: ;*******************************************************************
732: ;       superclass virtual method override functions
733: ;*******************************************************************
734:
```

27

```
735: ;*****************************************************************
736: ;      START OF CODE TABLE ENTRIES
737: ;*****************************************************************
738:
739:          SEG     _INIT_CODE
740:          CM      MEDIALNK.init
741:
742:
743: ***************************************************************
744: *
745: *      MEDIALINK PROTOCOL HANDLER
746: *
747: ***************************************************************
748:
749:              SEG     _CODE
750:
751: ***************************************************************
752: *
753: *      LINK TIMER TIMEOUT EVENT
754: *
755: ***************************************************************
756:
757:
758: *****************CT TIMEOUT***********************************
759: *
760: *      STATE IS RESP.  NO RESPONSE FROM REMOTE TO DATA PACKET.
761: *      ABORT PACKET AND CHANGE STATE TO VECTOR
762: *
763: ***************************************************************
764:
765: lnk*:SP
766.
767:          INC     LnkRetryCount            ; TRY FOR RESPONSE AGAIN
768:          BNE     lnkVECTOR
769:
770:          extern  TxDataTOCount(page0)
771:          inc     TxDataTOCount            ; DEBUG !!! COUNT TimeOut FRAMES
772:
773:          .DAA    #RES_TIMEOUT             ; RETURN TIMEOUT STATUS TO CALLER
774:
775: *
776: *      PUT LINK STATUS IN Tsk StkA
777: *
778:
779:      QuePak                               ; QUEUE PACKET IN TASK QUEUE
780:
781: *
782: *      CHANGE TIMER TO AWAIT VECTOR
783: *
784:          LDX     #lnkVECTOR
785:          STX     SysIRQCT
786:
787:
788:
789: *******************CT TIMEOUT*********************************
790: *
```

```
791: *         STATE IS VECTOR, SPLICE or UPLEVEL
792: *              CHECK FOR DATA TO Tx
793: *
794: ************************************************************
795:
796: lnkVECTOR
797: *Stub lnkSPLICE
798: lnkUPLEVEL
799.
800:        IdleCheck                        ; check link for idle
801:
802:        LDX    PakFCOUT                  ; CHECK PACKET QUE FOP ENTRIES
803:        CPX    PakFCIN
804.        BNE    lnkDataReady
805:        JMP    lnkNoData                 ; QUE IS EMPTY - Tx SPLICE OR VECTOR
806:
807: lnkDataReady
808:
809:        LDX    0,X                       ; EXTRACT Tsk FROM QUE
810:        LDY    PakPBuilder,X             ; **** DJW ****
811:        beq    lnkDataReady10
812:        LDD    #0
813:        STD    0,Y                       ; **** DJW **** SIGNAL MIDI THAT PACKET IS GONE **** DJW ****
814:        STD    PakPBuilder,X             ; JUST ZERO PakBuilder ONCE
815:
816:
817: *
818: *        SETUP DMA WRITE PARAMETERS
819: *
820: lnkDataReady10
821:        LDAB   #PAK_BufLth                ; COMPUTE BYTE COUNT FROM BYTES LEFT
822:
823:        SUBB   PakCount,X                ; PACKET LENGTH
824:        LDY    PakPData,X                ; PAK START
825:
826: *
827: *        PUT Tx SEQUENCE IN PAK PREAMBLE
828: *
829:        LDAA   LnkTxSequence
830:        STAA   LNK_SEQ,Y
831:
832: *
833: *        SETUP EOM STATE FOR DATA OR BROADCAST FRAME
834: *
835:
836:        LDX    #lnkTxDataEOM             ; PRESET FOR DATA FRAME
837:        LDAA   0,Y                       ; GET ID FROM PACKET
838:        CMPA   #LNK_DataID              ; DATA FRAME?
839:        BEQ    lnkDmaWriteState          ; YES
840:        LDX    #lnkGroupEOM              ; BROADCAST GROUP OR ALL
841:
842: *
843: *        CONFIGURE DMA, MANCHESTER AND DUSCC FOR Tx
844: *              B = DMA BYTE COUNT
845: *              Y = DMA DATA ADRS
846: *              X = EOM STATE ADDRESS
```

```
847: *
848:
849: lnkDmaWriteState
850:
851:          STX      Sys:RQEOM              ; SET EOM VECTOR
852:
853: lnkDmaWrite
854:
855: *
856: *        SETUP Tx DMA REGISTERS
857: *
858:          STY      DmaCh1Data            ; DATA ADRS TO DMA
859:
860:          CLRA
861:          STD      DmaCh1Cnt             ; STORE COUNT IN DMA
862:
863: *
864: *        SET CT PRELOAD TO 4 TIMES FRAME LENGTH
865: *
866:
867:          LSLD
868:          LSLD
869:          STD      CTPRH+LinkA
870:
871:          ldaa     #$02                  ; INTERRUPT ON TRAILING FLAG
872:          staa     IER+LinkA             ; ready for action
873:
874:          LDAA     #SOM                  ; SOM
875:          STAA     CCR+LinkA
876:
877:          LDAA     #TxEna                ; ENABLE Tx
878:          STAA     CCR+LinkA
879:
880:          LDAA     #$FF                  ; RESET END FLAG BIT FOR INTERRUPT
881:          STAA     RSR+LinkA
882:
883:          LDAA     #CTCir                ; CLEAR CT INTERRUPT FLAG
884:          STAA     ICTSR+LinkA
885:
886:          LDAA     #CTPre                ; PRESET COUNTER TIMER
887:          STAA     LinkA+CCR
888:
889:          LDAA     #CTEna                ; ENABLE TIMER
890:          STAA     LinkA+CCR
891:
892:          ldx      #lnkEOMTimeOut        ; missed EOM vector
893:          stx      SysIRQCT
894:
895:          RTI
896:
897:
898:
899:
900: lnkDmaBusy
901:
902:          CTDelayLong
```

30

```
MEDIALNK.ASM                    PAGE 21  Thu Feb 22 10:27:11 1990

903:
904:            LDX      #lnkSLAVE
905:            STX      SysIRQCT
906:
907:            extern   lnkBusyCount(page0)
908:            inc      lnkBusyCount            , DEBUG count times through
909:
910:            RTI
911:
912:
913:
914:
915:
916: lnkEOMTimeOut
917:
918:            TxRxDisable
919:
920:            CTDelayLong
921:
922:            LDY      #lnkRESP
923:
924:            LDX      SysIRQEOM               ; SET EOM VECTOR
925:            CPX      #lnkTxDataEOM           ; PRESET FOR DATA FRAME
926:            BEQ      lnkEOMTimeOut10
927:            CPX      #lnkGroupEOM            ; BROADCAST GROUP OR ALL
928:            BEQ      lnkEOMTimeOut10
929:
930:            LDY      #lnkVECTOR
931:
932: lnkEOMTimeOut10
933:            STY      SysIRQCT
934:
935:            RxEnable
936:
937:            RTI
938:
939:
940: *********************CT TIMEOUT*****************************
941: *
942: *      STATE IS SLAVE.
943: *
944: **********************************************************
945:
946: lnkSLAVE
947:
948:            IdleCheck                       ; check link for idle
949:
950:            bset    SysResetFlag,ReZipBit   ; signal ring to reZip
951:
952: *
953: *      DATA QUE IS EMPTY - SETUP SPLICE OR VECTOR FOR Tx
954: *
955:
956: lnkNoData
957:
958:            LDD     lnkMyPma                ; SEE IF MYPMA < PMA
```

31

```
MEDIALNK.ASM                    PAGE 22   Thu Feb 22 10:27:11 1990

959:        CMPA    LnkPMA
960:        BLT     lnkTxSplice              ; LESS THAN - SEND SPLICE
961:                .
962: *
963: *      SEND VECTOR PACKET
964: *
965:        STD     LnkPMA
966:
967:        TableIndex LnkNIDTable,LnkPMA
968:
969:        ldaa    0,x                      ; NID(pma) = 0 ?
970:        bne     LnkTxVect05              ; no
971:
972:        ldab    LnkvecSID
973:        cmpb    SysNodeID
974:        beq     lnkTxVect05
975:        stab    0,x
976:        tba
977:
978: LnkTxVect05
979:
980:        LDAB    SysNodeID                ; SETUP SID = ME
981:        STD     LnkvecDID                ; VECTOR DID = NID
982:
983: *
984: *      check Lock ID flag for LID request
985: *
986:        ldx     LnkLIDActiveTsk          ; my LID active?
987:        beq     lnkTxvect07              ; no - check for LID service
988:        cmpb    LnkLID                   ; see if LID = NID
989:        beq     LnkTxVect07              . LID ok
990:        bset    SysResetFlag,ReZipBit    ; signal ring to reZip
991:        stab    LnkLID                   ; regain LID
992:
993: LnkTxVect07
994:
995:        tst     LnkLIDFlag               ; need lock service?
996:        beq     lnkTxvect20              . no - done
997:        bmi     lnkTxvect10               - do clear LID
998:        tst     LnkLID                   ; LID free?
999:        bne     lnkTxVect20              ; no - wait till free
1000:       stab    LnkLID                   ; yes - grab LID
1001:       bra     lnkTxVect20              ; done
1002:
1003: lnkTxVect10
1004:
1005:       ldd     #0
1006:       std     LnkLIDActiveTsk          ; free active task
1007:       staa    LnkLID                   ; take LID off system
1008:       staa    LnkLIDFlag               ; clear release flag
1009:
1010: lnkTxVect20
1011:
1012:       LDY     #LnkVectorPak            ; POINTER TO STATIC VECTOR PACKET
1013:       LDAB    #LNK_VectorLth           ; LENGTH OF VECTOR PACKET
1014:
```

```
MEDIALNK.ASM                    PAGE 23   Thu Feb 22 10:27:11 1990

1015:        LDX     #lnkVectEOM            ; SET EOM DATA TYPE TO SPLICE OR VECTOR
1016:
1017:        JMP     lnkDmaWriteState      ; SETUP DMA FOR WRITE
1018:
1019:
1020: *
1021: *      SEND SPLICE PACKET
1022: *
1023:
1024: lnkSPLICE
1025:
1026:        IdleCheck                      ; check link for idle
1027:
1028: lnkTxSplice
1029:
1030:        ldab    LnkVecSID
1031:        stab    LnkSplDID
1032:
1033:        LDAB    #LNK_SpliceLth        ; LENGTH OF VECTOR PACKET
1034:
1035:        LDX     #lnkVectEOM           ; SET EOM DATA TYPE TO SPLICE OR VECTOR
1036:
1037:        LDY     #LnkSplicePak         ; POINTER TO STATIC VECTOR PACKET
1038:
1039:        JMP     lnkDmaWriteState      ; SETUP DMA FOR WRITE
1040:
1041:
1042:
1043:
1044:
1045: ********************CT TIMEOUT************************
1046: *
1047: *      STATE IS TxRESP.  SEND RESPONSE
1048: *
1049: ********************************************************
1050:
1051: lnkTxRESP
1052:
1053:        IdleCheck                      ; check link for idle
1054:
1055: *
1056: *      SETUP DMA PARAMS FOR RESPONSE PACKET
1057: *
1058:
1059:        LDY     #LnkResponsePak       ; POINTER TO STATIC PACKET
1060:        LDAB    #LNK_ResponseLth      ; STATIC PACKET LENGTH
1061:
1062:        LDX     #lnkTxRESPEOM
1063:
1064:        JMP     lnkDmaWriteState      ; SETUP DMA FOR WRITE
1065:
1066:
1067:
1068:
1069:
1070: ********************CT TIMEOUT************************
```

```
MEDIALNK.ASM                    PAGE 24   Thu Feb 22 10:27:11 1990

1071: *
1072: *       STATE IS VECT1.  SEND VECTOR PACKET
1073: *
1074: ************************************************************
1075:
1076: LnkVECT1
1077:
1078:         IdleCheck                        ; check link for idle
1079:
1080:         LDY     #LnkVectorPak            ; POINTER TO STATIC VECTOR PACKET
1081:
1082:         TableIndex LnkNIDTable,LnkPMA
1083:
1084:         ldab    0,X
1085:         STAB    LnkVecDID                ; VECTOR DID = NID
1086:
1087:         LDAA    SysNodeID                ; SETUP SID = ME
1088:         STAA    LnkVecSID
1089:
1090:         LDAB    #LNK_VectorLth           ; LENGTH OF VECTOR PACKET
1091:
1092:         LDX     #LnkVect1EOH
1093:
1094:         JMP     LnkDmaWriteState         ; SETUP DMA FOR WRITE
1095:
1096:
1097:
1098:
1099: **********************CT TIMEOUT**************************
1100: *
1101: *       STATE IS VECT2.
1102: *
1103: ************************************************************
1104:
1105: LnkVECT2
1106:
1107:         IdleCheck                        ; check link for idle
1108:
1109:         LDY     #LnkVectorPak            ; POINTER TO STATIC VECTOR PACKET
1110:
1111:         TableIndex LnkNIDTable,LnkPMA
1112:
1113:         ldab    0,X
1114:         STAB    LnkVecDID                ; VECTOR DID = NID
1115:
1116:         cmpb    LnkLID                   ; LID belong to lost node?
1117:         bne     LnkVECT210               ; no
1118:
1119:         clr     LnkLID                   ; yes - release LID
1120:
1121: LnkVECT210
1122:
1123:         LDAA    SysNodeID                ; SETUP SID = ME
1124:         STAA    LnkVecSID
1125:
1126:         LDAB    #LNK_VectorLth           ; LENGTH OF VECTOR PACKET
```

34

```
1127:
1128:        LDX    #lnkVect2EOM
1129:
1130:
1131:        JMP    lnkDmaWriteState              ; SETUP DMA FOR WRITE
1132:
1133:
1134:
1135:
1136:
1137:
1138:
1139:
1140: *****************************EOM************************************
1141: *
1142: *    END OF MESSAGE (EOM) INTERRUPT ENTRY POINT
1143: *          EOM STATE IS PRESET TO JUMP TO SPECIFIC Tx Pak TYPE
1144: *
1145: *****************************EOM************************************
1146:
1147:
1148:
1149:
1150: *****************************EOM************************************
1151: *
1152: *    Tx EOM FROM DATA PACKET
1153: *
1154: *****************************EOM************************************
1155:
1156: lnkTxDataEOM
1157:
1158:        StatusCheck                          ; READ RSR STATUS FROM DUSCC RxFIFO
1159:
1160:        TxRxDisable
1161:
1162:        TSTB                                 ; check for Tx collision
1163:        beq    lnkTxDataEOM10               ; packet OK
1164:             .
1165:        bra    lnkCollision                 ; err in Tx - start recovery
1166: *
1167: *    Data Tx OK - prepare for Rx
1168: *
1169: lnkTxDataEOM10
1170:
1171:        RxEnable
1172:
1173:        CTDelay4
1174:
1175:        LDX    #lnkRESP                      ; RESTART WITH 4 PDA DELAY AND RESP = CT STATE
1176:        STX    SysIRQCT
1177:
1178:        RTI
1179:
1180: *
1181: *    link Collision
1182: *
```

```
MEDIALNK.ASM                      PAGE 26  Thu Feb 22 10:27:11 1990

1183: lnkCollision
1184:
1185:         CollisionDebug       ; DEBUG
1186:
1187:         ldx     #LnkUPLEVEL                  ; see if CT State = UPLEVEL or SPLICE
1188:         cpx     SysIRQCT
1189:         beq     lnkCollision10
1190:         ldx     #LnkSPLICE
1191:         cpx     SysIRQCT
1192:         beq     lnkCollision10
1193:
1194: *
1195: *       not UPLEVEL or SPLICE so set CT State to VECTOR
1196: *
1197:         RxEnable
1198:
1199:         CTDelay1
1200:
1201:         LDX     #lnkVECTOR
1202:         STX     SysIRQCT
1203:
1204:         RTI
1205:
1206:
1207:
1208: lnkCollision10
1209:         ldaa    LnkMMR
1210:         staa    LnkPCNT
1211:
1212:         RxEnable
1213:
1214:         CTDelayLong                         -
1215:
1216:         LDX     #lnkSLAVE
1217:         STX     SysIRQCT
1218:
1219:         RTI
1220:
1221:
1222: ****************************EOM****************************************
1223: *
1224: *       Tx EOM for Group or Broadcast All
1225: *
1226: *********************************************************************
1227:
1228: lnkGroupEOM
1229:
1230:         StatusCheck                  ; READ RSR STATUS FROM DUSCC RxFIFO
1231:
1232:         TxRxDisable
1233:
1234:         TSTB                         ; check for Tx collision
1235:         BEQ     lnkGroupEOM10
1236:
1237:         JMP     lnkCollision         ; err in Tx - start recovery
1238:
```

```
MEDIALNK.ASM                 PAGE 27   Thu Feb 22 10:27:11 1990

1239: *
1240: *      Data Tx OK - prepare for Rx
1241: *
1242: lnkGroupEOM10
1243:
1244:        RxEnable
1245:
1246:        CTDelay2
1247:
1248:        extern  TxDataCount(page0)
1249:        inc    TxDataCount              ; DEBUG !!! COUNT Tx FRAMES
1250:
1251:        ldaa   #RET_OK                  ; RETURN OK STATUS TO SENDER
1252:        QuePak                          ; QUEUE PACKET IN TASK QUEUE
1253:
1254:        LDX    #lnkVECTOR
1255:        STX    SysIRQCT
1256:
1257:        RTI
1258:
1259:
1260: *************************EOM*************************************
1261: *
1262: *      TxEOM from Splice or Vector Packet
1263: *
1264: ***************************************************************
1265:
1266: lnkVectEOM
1267:
1268:        StatusCheck                      ; READ RSR STATUS FROM DUSCC RxFIFO
1269:
1270:        TxRxDisable
1271:
1272:        TSTB                             ; check for Tx collision
1273:        beq    lnkVectEOM10
1274:
1275:        jmp    lnkCollision              ; err in Tx - start recovery
1276: *
1277: *      Data Tx OK - prepare for Rx
1278: *
1279: lnkVectEOM10
1280:
1281:        RxEnable
1282:
1283:        CTDelay4
1284:
1285:        ldab   #$ff
1286:        STAB   LnkActive                 ; keep alive orange led
1287:
1288:        LDX    #lnkVECTOR
1289:
1290:        ldaa   LnkVecDID                 ; if DID = 0 then stick with VECTOR
1291:        beq    lnkVectEOM20
1292:
1293:        cmpa   SysNodeID                 ; am I last ring survivor?
1294:        beq    lnkVectEOM20              ; yes - stick with VECTOR
```

37

```
MEDIALNK.ASM                    PAGE 28  Thu Feb 22 10:27:11 1990

1295:
1296:          LDX     #lnkVECT1
1297:                  .
1298: lnkvectEOM20
1299:
1300:          STX     SysIRQCT
1301:
1302:          RTI
1303:
1304:
1305: *****************************EOM********************************************
1306: *
1307: *      Tx EOM FROM TxRESP
1308: *
1309: **************************************************************************
1310:
1311: lnkTxRESPEOM
1312:
1313:          StatusCheck                         ; READ RSR STATUS FROM DUSCC RxFIFO
1314:
1315:          TxRxDisable
1316:
1317:          TSTB                                ; check for Tx collision
1318:          beq     lnkTxRESPEOM10              ; packet OK
1319:
1320:          bra     lnkTxRESPColsn              ; err in Tx - start recovery
1321:
1322: *
1323: *      Data Tx OK - prepare for Rx
1324: *
1325: lnkTxRESPEOM10
1326:
1327:          RxEnable
1328:
1329:          CTDelayLong
1330:
1331:          LDX     #lnkSLAVE
1332:          STX     SysIRQCT
1333:
1334:          RTI
1335:
1336:
1337:
1338: *
1339: *      collision during TxRESP
1340: *
1341: lnkTxRESPColsn
1342:
1343:          CollisionDebug          ; DEBUG
1344:
1345:          RxEnable
1346:
1347:          CTDelay1
1348:
1349:          RTI
1350:
```

38

```
MEDIALNK.ASM                     PAGE 29   Thu Feb 22 10:27:11 1990

1351:
1352:
1353: ****************************EOM********************************************
1354: *
1355: *       Tx EOM from VECT1
1356: *
1357: *************************************************************************
1358:
1359: lnkvect1EOM
1360:
1361:         StatusCheck                       ; READ RSR STATUS FROM DUSCC RxFIF
1362.
1363         TxRxDisable
1364:
1365:         TSTB                              ; check for Tx collision
1366:         beq     lnkvect1EOM10             ; packet OK
1367:
1368:         bra     lnkVectColsn              ; err in Tx - start recovery
1369:
1370: *
1371: *       Data Tx OK - prepare for Rx
1372: *
1373: lnkVect1EOM10
1374:
1375:         RxEnable
1376:
1377:         CTDelay4
1378:
1379:
1380:         LDX     #lnkVECT2
1381:         STX     SysIRQCT
1382:
1383:         RTI
1384:
1385:
1386:
1387: *
1388: *       collision during VECT1 or VECT2 Tx
1389: *
1390: lnkVectColsn
1391:
1392:         CollisionDebug          ; DEBUG
1393:
1394:         RxEnable
1395:
1396:         CTDelay1
1397:
1398:         RTI
1399:
1400:
1401:
1402: ****************************EOM********************************************
1403: *
1404: *       Tx EOM from VECT2
1405: *
1406: *************************************************************************
```

39

```
MEDIALNK.ASM                    PAGE 30  Thu Feb 22 10:27:11 1990

1407:
1408: lnkVect2EOM
1409:
1410:          StatusCheck                      ; READ RSR STATUS FROM DUSCC RxFIFO
1411:
1412:          TxRxDisable
1413:
1414:          TSTB                             ; check for Tx collision
1415:          beq      lnkVect2EOM10
1416:
1417:          jmp      lnkVectColsn             ; err in Tx - start recovery
1418:
1419: *
1420: *        Data Tx OK - prepare for Rx
1421: *
1422: lnkVect2EOM10
1423:
1424:          TableIndex LnkNIDTable,LnkPMA
1425:
1426:          clr      0,x                      ; zero NID(pma)
1427:
1428:          bset     SysResetFlag,ReZipBit    ; signal ring to reZip
1429:
1430:          RxEnable
1431:
1432:          CTDelay
1433:
1434:          LDX      #lnkVECTOR
1435:          STX      SysIRoot
1436:
1437:          RTI
1438:
1439:
1440: *****************************EOM*****************************************
1441: ***********************************************************************
1442: *
1443: *        Rx EOM on Packet from Link
1444: *
1445: ***********************************************************************
1446: ***************************EOM*****************************************
1447:
1448: lnkRxEOM
1449:
1450:          CTStop
1451:
1452:          LDAB     RSR+LinkA
1453:
1454:          TxRxDisable
1455:
1456:          ANDB     #$72                     ; check for Tx collision
1457:          beq      lnkRxEOM10               ; no collision
1458:
1459: *
1460: *        Collision detected in Rx from Remote - restart Rx  and ignore Frame
1461: *
1462: lnkRxEOMErr
```

40

```
MEDIALNK.ASM                    PAGE 31  Thu Feb 22 10:27:11 1990

        CollisionDebug

        LDD     #PAK_BufLth                 ; SETUP RxDMA LENGTH REGISTER
        STD     DmACh0Cnt

        LDD     LnkPRxData
        STD     DmaCh0Data

        RxEnable                            ; RESTART Rx

        JMP     LnkRxRestart


*
*       Rxed A GOOD PACKET - SWITCH BUFFERS AND REENABLE Rx
*

LnkRxEOMTC:

        LDX     LnkPRxTsk                   ; SWITCH Tsk POINTERS

        LDAB    DmaCh0Cnt+1                 ; PUT BYTES LEFT IN Tsk

        STAB    PakCount,X
        LDD     #PAK_BufLth                 ; SETUP RxDMA LENGTH REGISTER
        STD     DmACh0Cnt

        LDD     LnkPRxTskBak
        STX     LnkPRxTskBak
        STD     LnkPRxTsk

        LDD     LnkPRxData                  ; SWITCH Data POINTERS
        LDX     LnkPRxDataBak
        STD     LnkPRxDataBak
        STX     LnkPRxData
        STX     DmaCh0Data

        RxEnable                            ; RESTART Rx

        LDX     LnkPRxDataBak

        ldab    LNK_ID,X                    ; extract packet ID
        BPL     LnkRxGroup                  ; THIS IS A GROUP - CHECK GROUP TABLE

        ldy     #LnkPakIDTable              ; setup jump based on pak ID
        andb    #$0f                        ; mask top bits
        lslb                                ; index times 2
        aby
        ldab    LNK_DID,X                   ; setup DID in reg B
        ldy     0,Y
        jmp     0,Y


LnkPakIDTable
```

MEDIALNK.ASM                    PAGE 32   Thu Feb 22 10:27:11 1990

```
1519:        FDB      LnkRxRestart
1520:        FDB      LnkRxRestart
1521:        FDB      LnkRxRestart
1522:        FDB      LnkRxRestart
1523:        FDB      LnkRxRestart
1524:        FDB      LnkRxRestart
1525:        FDB      LnkRxRestart
1526:        FDB      LnkRxRestart
1527:        FDB      LnkRxRestart
1528:        FDB      LnkRxRestart
1529:        FDB      LnkRxResponse
1530:        FDB      LnkRxData
1531:        FDB      LnkRxSplice
1532:        FDB      LnkRxRestart
1533:        FDB      LnkRxVector
1534:        FDB      LnkRxBroadcast
1535:
1536:
1537: *
1538: *      CHECK GROUP ID TABLE FOR MATCH
1539: *
1540: LnkRxGroup
1541:        ldy      LNK_ID,X              ; put group id in y
1542:        ldaa     #LnkGroupIDCount      ; count of ID Table entries
1543:        ldab     #LnkGroupIDLength     ; length of ID table entry
1544:        LDX      #LnkGroupIDTable      ; SETUP TABLE SEARCH
1545: LnkRxGroup10
1546:        CPY      0,X                   ; CHECK Y FOR MATCH
1547:        BEQ      LnkRxGroup30          ; MATCH - DISPATCH GROUP TO PACKET
1548:        ABX                            ; point to next ID entry
1549:        deca                           ; count down number of table entries
1550:        BNE      LnkRxGroup10
1551:
1552: *
1553: *      GROUP NOT FOR ME - INGORE AND RESTART Rx
1554: *
1555:
1556: LnkRxRestart                          ; UNKNOWN PACKET - TRASH IT AND RESTART Rx
1557:
1558:        CTDelayLong
1559:        LDX      #LnkSLAVE
1560:        STX      SysIRQCT
1561:        RTI
1562:
1563:
1564: *
1565: *      have Group match in ID table - extract handle from ID table and
1566: *      put in X context in Tsk
1567: *
1568: LnkRxGroup30
1569:        inx                            ; point to handle
1570:        inx
1571:        ldy      0,x                   ; handle to y
1572:        ldx      LnkPRxTskBak          ; get Tsk adrs
1573:        ldx      TskPTos,x             ; extract stack pointer
1574:        sty      TskStkX,x             ; save handle in contest
```

```
MEDIALNK.ASM                    PAGE 33  Thu Feb 22 10:27:11 1990

1575:         ldx     LnkPRxDataBak              ; point back to data buffer
1576:
1577: *
1578: *      DISPATCH GROUP TO PACKET TASK
1579: *
1580: LnkRxBroadcast
1581:
1582:         LDAB    LNK_SEQ,Y                 ; MAKE SURE Pak NOT ALREADY Rxed
1583:         CMPB    LnkRxSequence
1584:         BEQ     LnkRxRestart              ; ALREADY GOT THIS ONE - TRASH Pak
1585:         STAB    LnkRxSequence             ; RESET Rx TO THIS Tx SEG NUMBER
1586:
1587:         CTDelayLong
1588:
1589:         LDX     #LnkSLAVE
1590:         STX     SysIRQCT
1591:         bra     LnkDispatch               ; send Pak to task
1592:
1593:
1594: *
1595: *      DATA PACKET FOR ME - DISPATCH TO PACKET TASK
1596: *
1597: LnkRxData
1598:
1599:         cmpb    SysNodeID                 ; packet for me?
1600:         bne     LnkRxRestart              ; no - trash it
1601:
1602:         LDAB    LNK_SID,X                 ; EXTRACT SENDER ID
1603:         STAB    LnkResDID                 ; PUT IT IN RESPONSE PACKET
1604:
1605:         LDAB    LNK_SEQ,X                 ; MAKE SURE Pak NOT ALREADY Rxed
1606:
1607:         CTDelay1
1608:
1609:         LDX     #LnkTxRESP
1610:         STX     SysIRQCT
1611:
1612:         CMPB    LnkRxSequence
1613:         BNE     LnkRxData05
1614:         RTI                               ; ALREADY GOT THIS ONE - TRASH Pak
1615: LnkRxData05
1616:         STAB    LnkRxSequence             ; RESET Rx TO THIS Tx SEG NUMBER
1617:         STAB    LnkResSEQ                 ; RETURN SEQUENCE NUMBER TO Txer
1618:
1619: LnkDispatch
1620:
1621:         extern  RxDataCount(page0)        ; GOOD DATA FRAME COUNTER
1622:         inc     RxDataCount
1623:
1624:         LDX     PakPoolHead               ; CHECK IF BUFFER POOL OK
1625:         BEQ     LnkRxData10               ; EMPTY - REJECT PACKET
1626:
1627:         LDX     LnkPRxTskBak              ; POINT TO Rx Tsk
1628:
1629:         LDAA    #RET_OK                   ; GIVE TASK AN OK STATUS
1630:
```

EP 0 447 873 A2

```
MEDIALNK.ASM                    PAGE 34   Thu Feb 22 10:27:11 1990

1631:           LDY      TskPTos,X             ; AND TOP OF Tsk STACK
1632:           STAA     TskStkA,Y             ; PUT RETURN STATUS IN STACK
1633:
1634:           tskQAdd                        ; ADD TO TSK QUEUE
1635:
1636:           RxNewPak                       ; SETUP Rx WITH A NEW Pak
1637:
1638:           RTI
1639:
1640: *
1641: *         POOL IS EMPTY - REJECT PACKET AND RETURN STATUS TO REMOTE
1642: *
1643: LnkRxData10
1644:
1645:           LDAA     #RET_ERROR            ; LOW POOL STATUS
1646:           STAA     LnkRSP               ; PUT IN RESPONSE PACKET
1647:
1648:           RTI
1649:
1650:
1651: *
1652: *         VECTOR PACKET
1653: *
1654:
1655: LnkRxVector
1656:
1657: *
1658: *         INITIALIZE Tx AND Rx SEQUENCE NUMBERS
1659: *
1660:           LDD      #$00FF
1661:           STD      LnkTxSequence         ; Rx MUST BY LESS THAN Tx
1662:
1663:           STAB     LnkActive            ; keep alive orange led
1664:
1665: *
1666: *         NNR = MID - SID
1667: *
1668:           LDAA     SysNodeID             ; NNR = MID - SID
1669.           SUBA     LNK_SID,X
1670:           ANDA     #$0F                  ; JUST ALLOW 16 NNR VALUES
1671:           STAA     LnkNNR                ; GET NEW VALUE FOR NNR
1672:
1673: *
1674: *         SAVE VECTOR INFO IN LnkVectorPak
1675: *
1676:           LDD      LNK_PDA,X
1677:           STD      LnkPDA
1678:
1679:           LDD      LNK_PHI,X
1680:           STD      LnkPHI
1681:
1682:           LDD      LNK_DID,X
1683:           STD      LnkvecDID
1684:
1685:           CMPB     SysNodeID             ; SysNodeID conflict?
1686:           BNE      LnkRxVector10
```

44

```
1687:          bset    SysResetFlag,NodeIDConflictBit  ; yes - signal ring to reset
1688:
1689: LnkRxvector10
1690:
1691:          CMPA    SysNodeID                 ; VECTOR TO ME?
1692:          BNE     LnkRxVector20             ; NO - CHECK FOR SPLICE CONDITION
1693:
1694: *
1695: *        VECTOR TO ME
1696: *
1697:          staa    LnkVectorActive           ; top LED green
1698:
1699:          TBA                               ; SID to A
1700:          TableIndex LnkPIDTable,LnkPMA      ; ENTER SID IN PID TABLE
1701:          STAA    0,x
1702:
1703:          tst     LnkVectorTimer            ; OK to vector?
1704:          bne     LnkRxVector15             ; yes - still have remote data
1705:
1706: *
1707: *        splice out time
1708: *
1709:          TableIndex LnkNIDTable,LnkPMA      ; get NID for SPD
1710:          ldaa    0,x
1711:          cmpa    SysNodeID                 ; am I next?
1712:          beq     LnkRxVector15             ; yes - dont splice out
1713:
1714:          staa    LnkSPD                    ; store my NID as SPD
1715:          jmp     LnkRxVector88             ; setup to splice out
1716:
1717: *
1718: *        RESET COUNTERS AND GO BACK TO VECTOR CT STATE
1719: *
1720: LnkRxVector15
1721:
1722:          CLR     LnkSCNT                   ; CLEAR PD COUNTERS
1723:          CLR     LnkPCNT
1724:
1725:          CTDelay2
1726:
1727:          LDX     #LnkVECTOR
1728:          STX     SysIRQCT
1729:
1730:          RTI
1731:
1732: *
1733: *        CHECK FOR SPLICE CONDITION
1734: *
1735:
1736: LnkRxVector20
1737:
1738:          tst     LnkVectorTimer            ; need to splice in?
1739:          bne     LnkRxVector25             ; yes - see if I need to splice in
1740:          jmp     LnkRxVector150            ; no - exit
1741:
1742: LnkRxVector25
```

```
MEDIALNK.ASM                    PAGE 36  Thu Feb 22 10:27:11 1990

1743:
1744:        TSTA                            ; DID = 0 ?
1745:        beq     LnkRxVector35           ; yes - init NID
1746:
1747: *
1748: *      CHECK IF SID<NID<DID or DID<SID<NID or NID<DID<SID
1749: *
1750:
1751:        CBA                             ; DID < SID ?
1752:        BCC     LnkRxVector40           ; NO
1753:        CMPB    SysNodeID               ; SID < NID ?
1754:        BCS     LnkRxVector30           , YES - SPLICE IN
1755:        CMPA    SysNodeID               ; NID < DID ?
1756:        BCS     LnkRxVector50           ; NO
1757:
1758: LnkRxVector30
1759:
1760:        TableIndex  LnkNIDTable,LnkPMA
1761:        STAA    0,x                     ; NID(pma) DID
1762:
1763: LnkRxVector35
1764:
1765:        ldaa    SysNodeID               ; NID = spd
1766:        staa    LnkSPD
1767:
1768:        jmp     LnkRxVector75
1769:
1770: LnkRxVector40
1771:
1772:        CMPA    SysNodeID               ; NID < DID ?
1773:        BCS     LnkRxVector50           ; NO
1774:        CMPB    SysNodeID               ; SID < NID ?
1775:        BCS     LnkRxVector30           ; YES - SPLICE
1776:
1777: LnkRxVector50
1778:
1779: *
1780: *      CHECK IF MyPMA > PMA
1781: *
1782:
1783:        LDAA    LnkMyPMA
1784:        CMPA    LnkPMA
1785:        BHI     LnkRxVector60
1786:
1787: *
1788: *      CHECK IF DID = PID(pma)
1789: *
1790:
1791:        TableIndex      LnkPIDTable,LnkPMA
1792:
1793:        LDAA    0,X
1794:        CMPA    LnkVecDID
1795:        BNE     LnkRxVector160
1796:
1797:        LDAA    LnkSCNT                 ; SCNT = 0?
1798:        BEQ     LnkRxVector140
```

46

```
MEDIALNK.ASM                    PAGE 37  Thu Feb 22 10:27:11 1990

1799:           CMPA    #1
1800:           BNE     lnkRxVector150
1801:           BRA     lnkRxVector88
1802:
1803: lnkRxVector140
1804:
1805:           LDAA    #3                      ; SCNT = 2
1806:           STAA    LnkSCNT
1807:
1808: lnkRxVector150
1809:
1810:           DEC     LnkSCNT
1811:
1812:           BRA     lnkRxVector160
1813:
1814: lnkRxVector60
1815:
1816:           LDAA    LnkPCNT                 ; PCNT <= 1?
1817:           CMPA    #1
1818:           BGT     lnkRxVector70
1819:               .
1820:           CLR     LnkSCNT                 ; CLEAR PD COUNTERS
1821:           CLR     LnkPCNT
1822:
1823:           CTDelay1
1824:
1825:           LDX     #lnkUPLEVEL
1826:           STX     SysIRQCT
1827:
1828:           RTI
1829:
1830: lnkRxVector70
1831:
1832:           DEC     LnkPCNT                 ; PCNT = PCNT - 1
1833:
1834: lnkRxVector160
1835:
1836:           CTDelayLong
1837:
1838:           LDX     #lnkSLAVE
1839:           STX     SysIRQCT
1840:
1841:           RTI
1842:
1843: *
1844: *        DID = 0
1845: *
1846:
1847: lnkRxVector75
1848:
1849:           LDAA    LnkPCNT                 ; PCNT = 0
1850:           BEQ     lnkRxVector80           ; YES
1851:
1852:           CMPA    #1                      ; PCNT = 1?
1853:           BNE     lnkRxVector70
1854:
```

MEDIALNK.ASM                    PAGE 38  Thu Feb 22 10:27:11 1990

```
1855: LnkRxVector88
1856:
1857:        CLR     LnkSCNT                   ; CLEAR PD COUNTERS
1858:        CLR     LnkPCNT
1859:
1860:        CTDelay1
1861:
1862:        LDX     #LnkSPLICE
1863:        STX     SysIRQCT
1864:
1865:        RTI
1866:
1867: *
1868: *      CHECK IF MyPMA = PMA
1869: *
1870:
1871: LnkRxVector80
1872:
1873:        LDAA    LnkMyPMA
1874:        CMPA    LnkPMA
1875:        BNE     LnkRxVector160
1876:
1877: *
1878: *      PCNT = NNR
1879: *
1880:
1881:        LDAA    LnkNNR
1882:        STAA    LnkPCNT
1883:
1884:        TST     LnkPMA                    ; PMA = 0 ?
1885:        BEQ     LnkRxVector88
1886:
1887:        LDX     PakPQOUT                  ; DATA READY?
1888:        CPX     PakPQIN
1889:        BEQ     LnkRxVector88
1890:
1891:        BRA     LnkRxVector160
1892:
1893:
1894:
1895: *
1896: *      RESPONSE PACKET FOR ME - SEE IF I ORDERED IT
1897: *
1898:
1899: LnkRxResponse
1900:
1901:        cmpb    SysNodeID                 ; packet for me?
1902:        beq     LnkRxResponse20           ; yes
1903:
1904: LnkRxResponse10
1905:
1906:        jmp     LnkRxRestart              ; no - trash packet
1907:
1908: LnkRxResponse20
1909:
1910:        LDAA    LNK_SEG,X                 ; MAKE SURE DATA SEG = RESP SEG
```

48

```
MEDIALNK.ASM                    PAGE 39  Thu Feb 22 10:27:11 1990

1911:         CMPA    LnkTxSequence
1912:         BNE     LnkRxResponse10         ; NO - TRASH PACKET AND RESTART Rx
1913:
1914:         LDAA    LNK_RSP,X               ; EXTRACT REMOTE RESPONSE FROM PACKET
1915:
1916:         LDX     #LnkRESP                ; WAITING FOR A RESPONSE?
1917:         CPX     SysIRQCT
1918:         BNE     LnkRxResponse10         ; NO - TRASH PACKET AND RESTART Rx
1919:
1920: *
1921: *      RESPONSE IS FOR MY Tx - PUT REMOTE STATUS IN TskStkA
1922: *
1923:
1924:
1925:         extern  TxDataCount(page0)
1926:         inc     TxDataCount             ; DEBUG !!! COUNT Tx FRAMES
1927:
1928:         QuePak                          ; QUEUE PACKET IN TASK QUEUE
1929:
1930:         CTDelay1
1931:
1932:         LDX     #LnkVECTOR
1933:         STX     SysIRQCT
1934:         RTI
1935:
1936: *
1937: *      SPLICE PACKET FOR ME - PUT SPD IN NID TABLE
1938: *
1939: LnkRxSplice
1940:
1941:         cmpb    SysNodeID               ; packet for me?
1942:         BNE     LnkRxResponse10         ; NO - TRASH PACKET AND RESTART Rx
1943:
1944:         ldaa    LNK_SPD,X               ; NID is SPD
1945:         TableIndex LnkNIDTable,LnkPHA   ; INDEX INTO NID TABLE
1946:         STAA    0,X                     ; PUT INTO NID TABLE
1947:
1948:         CLR     LnkSCNT                 ; CLEAR PC COUNTERS
1949:         CLR     LnkPCNT
1950:
1951:         CTDelay2
1952:
1953:         LDX     #LnkVECTOR
1954:         STX     SysIRQCT
1955:         RTI
1956:
1957:
1958:         END
```

```
1: ;********************************************************************
2: ;
3: ;      Project:        MidiTap
4: ;
5: ;      File:   MEDIALNK.INC
6: ;
7: ;      Copyright (C) 1989 by Lone Wolf, Inc.
8: ;      All rights reserved.                        .
9: ;
10: ;     Author: Tim Tuttle (TT)
11: ;
12: ;      Description
13: ;
14: ;      This file contains exportable class macro,
15: ;      instance data structure and method definitions.
16: ;      It should be #included by any module wishing to
17: ;      deal with MEDIALNK class instances.
18: ;
19: ;********************************************************************
20:
21: ;********************************************************************
22: ;
23: ;      Date\Author     Change comments
24: ;      -----------     ---------------
25: ;
26: ;      RSS 9/19/89     reshuffle page0 decls
27: ;      RSS 9/20/89     deleted superclass ref error
28: ;      TT 9/29/89      ADD EXTERN FOR LnkPRxData
29: ;      TT 10/18/89     FRAME COUNTERS
30: ;      TT 10/23/89     declare LnkPDA bss
31: ;      TT 10/23/89     declare medialnk.task code
32: ;      TT 11/10/89     externs for Bak pointers  _
33: ;      TT 11/29/89     add sequence number externs
34: ;      TT 12/1/89      delete reference to LnkCBAUDValue
35: ;      TT 12/27/89     add Group ID Table help and equates
36: ;      TT 1/8/90       equate pakpool reserve count            .
37: ;      TT 1/16/90      add externs for LID flag and count
38: ;      TT 1/16/90      delete LIDSleeper extern
39: ;      TT 1/16/90      delete page0 refs
40: ;      TT 1/25/90      LnkResetFlag is BSS
41: ;      TT 1/30/90      renumber packet IDs to make vector unique
42: ;      TT 2/2/90       delete LnkResetFlag BSS
43: ;      TT 2/5/90       add LNK_VectorTime equate
44: ;
45: ;*************************lastmod** TT  2/5/90    10:56:34   ***************
46:
47: ;********************************************************************
48: ; classhelp MEDIALNK       <one-liner description of class function>
49: ;
50: ; help MEDIALNK       <one-liner description>
51: ;
52: ; all lines beginning ';' consecutively from here are help text.
53: ; this help will be automatically converted into Norton's Guide
54: ; format. Do a help text block for each method. Delete these lines.
55:
56: ;********************************************************************
```

```
57:
58: #ifndef MEDIALNK_CLS
59: #define MEDIALNK_CLS 1
60:
61:         beginSuperclass  MEDIALNK, MODULE
62: #define THIS_INC MEDIALNK
63:         beginClass   THIS_INC, MODULE
64:
```

EP 0 447 873 A2

```
MEDIALNK.INC                    PAGE 3  Thu Feb 22 10:29:08 1990

65: ;**************************************************************************
66: ;       define class instance data structure
67: ;**************************************************************************
68:
69: Setup.THIS_INC %MACRO P1, P2, P3
70:                 %IFNB P1
71:                 %ENDIF
72:                 %IFNB P2
73:                 %ENDIF
74:                 %IFNB P3
75:                 %ENDIF
76:            %ENDM
77:
78:
79:



MEDIALNK.INC                    PAGE 4  Thu Feb 22 10:29:08 1990

80: ;**************************************************************************
81: ;       define class methods
82: ;**************************************************************************
83:
84: LNK_VectorTime   EQU    $FF                      ; no remote data timer
85: *
86: *       LINK Tx STATUS EQUATIONS
87: *
88: LNK_StatusOK     EQU    0                        ; DATA PACKET RESKPONSE OK
89: LNK_StatusAbort  EQU    $FF                      ; Tx ABORT OF DATA PACKET
90: *
91: *       PACKET ID EQUATIONS
92: *
93: LNK_BroadcastID  EQU    $FFFF                    ; BROADCAST ALL ID
94: LNK_VectorID     EQU    $FE
95: LNK_SynchID      EQU    $FD
96: LNK_SpliceID     EQU    $FC
97: LNK_DataID       EQU    $FB
98: LNK_ResponseID   EQU    $FA
99:
100: LNK_PakPoolReserve EQU  6                        ; reserve packets for link operation
101: ;**************************************************************************
102: ; help Methods          Method definition macros
103: ;
104: ;       virtual        <name>  define a polymorphic method
105: ;
106: ;       function       <name>  define a direct function call method
107: ;                              actual function label is <class>.<name>
108: ;
109: ;<name>  %MACRO                define an in-line method
110: ;       <code>
111: ;       %ENDM
112: ;
113: ;       override       <name>  override a superclass virtual method
114: ;                              actual function label is <class>.<name>
115: ;
116:
117: ;**************************************************************************
118:
119: ;**************************************************************************
120: ; help <method name>    <one-liner description>
121: ;
122: ;       help text for method name
123:
124: ;**************************************************************************
125:
126: ;**************************************************************************
127:
128:
```

51

```
MEDIALNK.INC                    PAGE 5   Thu Feb 22 10:29:08 1990

129: ;****************************************************************************
130: ;       define superclass method overrides
131: ;****************************************************************************
132:
133:          code     lnkRxEOM
134:          code     lnkSLAVE
135:          code     medialnk.task
136:
137:          BSS      LnkPDA
138:          BSS      LnkLID
139:
140:
141: #undef THIS_INC
142:
143: #endif
144: ;_____ MEDIALNK.INC ends _____
145:
```

```
PACKET.INC                    PAGE 6   Thu Feb 22 10:29:24 1990

; B = Pak Size (5 bytes in Pak preamble)
; A = Status
;
; Type:    Method function.




;*********************************************************************
;     define superclass method overrides
;*********************************************************************




;*********************************************************************
; help free             Return a buffer to PakPool
; free                  Return a buffer to PakPool
;
; SYNTAX:   free [PTR]
;
; Entry:    X is reference to packet (Handle/Addr)
;
; Exit:     X is Addr of packet, Y and D are destroyed.
;
; Type:     Override method.




;*********************************************************************
; help initialize       Initialize as task with ANR pakRxMgr
; initialize            Initialize as task with ANR pakRxMgr
;
; SYNTAX:   initialize [PTR]
;
; Entry:    X is reference to packet (Handle/Addr)
;
; Exit:     X is Addr of packet,
;           Y is addr pakRxMgr
;           D is preserved.
;
; Type:     Override method.




;*********************************************************************
; help new              get buffer from PakPool
; new                   get buffer from PakPool
;
; SYNTAX:   new PACKET [, ANR_address]
;
; Entry:    If TASK not present, then X = the addr of the Class TASK.
```

53

```
PACKET.INC                    PAGE 7  Thu Feb 22 10:29:24 1990

;              If PC not present, then D = PC to be filled in the stack frame.
;
; Exit:    X = addr of allocated Task if successful,  else X=0.
;          Z flag is clear if successful, else Z is set.
;          Y and D registers are preserved.
;
; Type:    Override method.




          endClass      THIS_INC, new

#undef THIS_INC

#endif
;_____ PACKET.INC ends _____
```

```
PACKET.INC                    PAGE 1   Thu Feb 22 10:29:24 1990

 1: ;*****************************************************************************
 2: ;
 3: ;      Project:        MidiTap
 4: ;
 5: ;      File:   PACKET.INC
 6: ;
 7: ;      Copyright (C) 1989 by Lone Wolf, Inc.
 8: ;      All rights reserved.
 9: ;
10: ;      Author: Tim Tuttle (TT)
11: ;
12: ;      Description
13: ;
14: ;      This file contains exportable class macro,
15: ;      instance data structure and method definitions.
16: ;      It should be #included by any module wishing to
17: ;      deal with PACKET class instances.
18: ;
19: ;*****************************************************************************
20:
21:
22:
23:
24: ;*****************************************************************************
25: ;
26: ;      Date\Author        Change comments
27: ;      -----------        ---------------
28: ;
29: ;      TT 10/18/89        ADD HELP FOR pakIDSwap
30: ;      TT 11/13/89        increase Pak count from 25 to 32
31: ;      DJW 11/17/89       moved structure definitions inside endclass
32: ;      DJW 11/17/89       im not sure what changed _
33: ;      TT 11/29/89        increase packet lth to 133 for sequence number
34: ;      TT 12/1/89         reduce Pak count to 30
35: ;      tt 12/7/89         define PAK_Cnt and PAK_Lth in PAGE0
36: ;      TT 12/11/89        move PAK_Cnt and PAK_Lth back to this inc      .
37: ;      RSS 12/22/89       Change to methods from subroutines
38: ;      RSS 12/22/89       Renamed PAK_Lth PAK_BufLth
39: ;      RSS 12/28/89       Removed Group List functions.
40: ;      rss 12/30/89       delete code for pakQuePacket
41: ;      DJW 1/8/90         declared pakAddxxx functions
42: ;      TT 1/14/90         delete refs to Bld calls
43:
44: ;************************lastmod** TT  1/14/90   7:18:24 12 ************
45:
46:
47:
48: ;*****************************************************************************
49: ; classhelp PACKET        <one-liner description of class function>
50: ;
51: ; help PACKET        <one-liner description>
52:
53: ;*****************************************************************************
54:
55:
56:
```

```
57:
58: #ifndef PACKET_CLS
59: #define PACKET_CLS 1
60:
61:         beginSuperclass   PACKET, MODULE, TASK
62: #include <TASK.INC>
63: #define THIS_INC PACKET
64:         beginClass   THIS_INC, MODULE, TASK
65:
66:
67:
68:
69: ;***********************************************************************
70: ;       define externals
71: ;***********************************************************************
72:
73:     extern   PakPQOUT(page0)
74:     extern   PakPQIN(page0)
75:     extern   PakPoolHead(page0)
76:     extern   PakPoolCnt(page0)
77:
78:
79:
80:
81: ;***********************************************************************
82: ;       define class shared equates
83: ;***********************************************************************
84:
85: PakLth              equ   TskLth
86: PAK_Cnt             equ   28              ; count of Packets in pool
87: PAK_BufLth          equ   133             ; length of data packet
88: PAK_PreambleLth     EQU   5               ; LENGTH OF PAK PREAMBLE
89:
90:
91:
92:                                                                    .
93:
94: ;***********************************************************************
95: ;       define class instance data structure
96: ;***********************************************************************
97:
98:     pointer  PakPData               ; Pak begin address
99:     pointer  PakPNext               ; Pak data begin address
100:    byte     PakCount               ; COUNT OF BYTES LEFT IN Pak
101:    pointer  PakPBuilder            ; TBD  !!!!!!!
102:
103:    structure
104:       field    PAK_HdrID,1           ; PACKET ID
105:       field    PAK_HdrDID,1          ; DESTINATION ADDRESS
106:       field    PAK_HdrSID,1          ; source (my) ID
107:       field    PAK_HdrSEQ,1          ; Tx sequence number
108:       field    PAK_HdrRTV,1          ; real time vector
109:    endstruct Pak_Header
110:
111:    BSS      PakPoolBegin           ; begin of PakPool for .Free
112:
```

```
PACKET.INC                    PAGE 3   Thu Feb 22 10:29:24 1990

113: ; **** DJW 1/8/90
114:          function   pakAddByte
115:          function   pakAddBlock
116:          function   pakAddStruct
117:
118:
119:   function     pakAddQueue
120:   function     pakIDSwap
121:   function     pakSetBrdCast
122:   function     pakSetGroup
123:   function     pakSetNode
124: ; override    new
125:   override     free
126:   override     initialize
127:
128:
129:
130: Setup.THIS_INC %MACRO PC, P2, P3
131:              %IFNB PC
132:                 LDD #PC
133:              %ENDIF
134:              %IFNB P1
135:              %ENDIF
136:              %IFNB P2
137:              %ENDIF
138:              %IFNB P3
139:              %ENDIF
140:            %ENDM
141:
142:
143:
144:
145: ;******************************************************************
146: ;      define class methods
147: ;******************************************************************
148:
149: ;******************************************************************
150: ; help pakAddByte          add a byte to a Packet
151: ; pakAddByte               add a byte to a Packet
152: ;
153: ;      SYNTAX:
154: ;              pakAddByte [PTR]
155: ;
156: ;      Entry:  X = Reference to packet object (Handle/Addr)
157: ;              B = byte to be appended
158: ;
159: ;      Exit:   X = Addr of Packet Object
160: ;!seealso pakAddBlock pakAddStruct
161:
162: ;******************************************************************
163:
164:
165: ;******************************************************************
166: ; help pakAddBlock           add a block to a Packet
167: ; pakAddBlock                add a block to a Packet
168: ;
```

```
PACKET.INC                    PAGE 4  Thu Feb 22 10:29:24 1990

169: ;        SYNTAX:
170: ;            pakAddBlock [PTR]
171: ;
172: ;        Entry:  X = Reference to packet object (Handle/Addr)
173: ;                Y = pointer to block start
174: ;                B = # bytes to be appended
175: ;
176: ;        Exit:  X = Addr of Packet Object
177: ;                   Sign is -ve if Block too big
178: ;!seealso pakAddByte pakAddStruct
179:
180: ;*****************************************************************
181:
182:
183: ;*****************************************************************
184: ; help pakAddStruct          reserve space for a structure
185: ; pakAddStruct               reserve space for a structure
186: ;
187: ;        SYNTAX:
188: ;            pakAddStruct [PTR]
189: ;
190: ;        Entry:  X = Reference to packet object (Handle/Addr)
191: ;                B = # bytes to be reserved
192: ;
193: ;        Exit:  X = Addr of Packet Object
194: ;               Y = pointer to first reserved byte
195: ;                   Sign is -ve if Block too big
196: ;!seealso pakAddBlock pakAddByte
197:
198: ;*****************************************************************
199:
200:
201: ;*****************************************************************
202: ; help pakAddQueue      Place a packet in the transmission queue
203: ; pakAddQueue           Place a packet in the transmission queue
204: ;
205: ; SYNTAX:    pakAddQueue  [PTR]
206: ;
207: ; Entry:     X = Tsk reference (Handle/Addr)
208: ;
209: ; Exit:      None
210:
211:
212:
213:
214: ;*****************************************************************
215: ; help pakIDSwap        Swap SID and DID, Reinit Packet data buffer.
216: ; pakIDSwap             Swap SID and DID, Reinit Packet data buffer.
217: ;
218: ; SYNTAX:    pakIDSwap [PTR]
219: ;
220: ; Entry:     X = Reference to packet object (Handle/Addr)
221: ;
222: ; Exit:      X = Addr of Packet Object
223: ;           Y = Addr of Packet buffer
224: ;           B = Pak Size (5 bytes in Pak preamble)
```

```
PACKET.INC                    PAGE 5  Thu Feb 22 10:29:24 1990

225: ;
226: ; Type:     Method function.
227:
228:
229:
230:
231: ;**********************************************************************
232: ; help pakSetBrdcast    Set packet for broadcast to all DID's
233: ; pakSetBrdcast         Set packet for broadcast to all DID's
234: ;
235: ; SYNTAX:   pakSetBrdCast [PTR]
236: ;
237: ; Entry:    X = Reference to packet object (Handle/Addr)
238: ;          B = RTV (Packet Type)
239: ;
240: ; Exit:     X = Addr of Packet Object
241: ;          Y = Addr of Packet buffer
242: ;          B = Pak Size (5 bytes in Pak preamble)
243: ;          A = Status
244: ;
245: ; Type:     Method function.
246:
247:
248:
249: ;**********************************************************************
250: ; help pakSetGroup      Set packet for broadcast to all specified groups
251: ; pakSetGroup           Set packet for broadcast to all specified groups
252: ;
253: ; SYNTAX:   pakSetGroup [PTR]
254: ;
255: ; Entry:    X = Reference to packet object (Handle/Addr)
256: ;          Y = Group ID
257: ;          B = RTV (Packet TYPE)
258: ;
259: ; Exit:     X = Addr of Packet Object
260: ;          Y = Addr of Packet buffer
261: ;          B = Pak Size (5 bytes in Pak preamble)
262: ;          A = Status
263: ;
264: ; Type:     Method function.
265:
266:
267:
268:
269: ;**********************************************************************
270: ; help pakSetNode       Set packet for broadcast to specified node.
271: ; pakSetNode            Set packet for broadcast to specified node.
272: ;
273: ; SYNTAX:   pakSetNode [PTR]
274: ;
275: ; Entry:    X = Reference to packet object (Handle/Addr)
276: ;          A = Destination NodeID
277: ;          B = RTV (Packet TYPE)
278: ;
279: ; Exit:     X = Addr of Packet Object
280: ;          Y = Addr of Packet buffer
```

## Claims

1. In combination,

a plurality of stations disposed in a progressive sequence, each of the stations being disposed at an individual position in the sequence and being constructed to communicate a data packet to other stations in the sequence,

first means for providing a communication of data packets from successive stations in the sequence to other stations in the sequence,

second means for providing for the passing of a vector from the communicating stations to the next stations in the sequence, and

third means for providing for the splicing into the sequence of individual stations in the plurality at positions in the sequence between the communicating stations and the next stations in the sequence before the next stations have communicated with other stations after receiving the vector.

2. In a combination as set forth in claim 1,

the first means for each of the next stations being operative in a first particular period of time to communicate with other stations after receiving the vector,

the third means for each of the stations being activated in a second particular period of time less than the first particular period of time to provide such splicing, and

the third means for each of the individual stations in the plurality being operative to splice such individual station into the sequence at the position in the sequence between the communicating station and the next station and to provide for subsequent communications of data packets between such individual station and other stations in the sequence.

3. In a combination as set forth in claim 1,

the first means including:

means for activating each of the successive stations in the sequence when such successive station has received the vector,

means for providing for a passing of the vector from each of the activated stations in the sequence to the next station in the sequence,

means for providing a response from each of the next stations in the sequence to the receipt of the vector by such station from the previous station in the sequence to activate such next station when the splicing means is not operative to splice into the sequence one of the other stations in the plurality, and

means for providing for the communication of a data packet to another station in the sequence from the statioln receiving the vector.

4. In a combination as set forth in claim 3,

the first means for each of the stations being operative in a first particular period of time to accept the vector when the vector is received by it,

the third means for each of the stations being activated in a second particular period of time less than the first particular period of time to provide for such splicing,

the third means for each of the stations in the sequence being operative to splice such station into the sequence at the proper position in the sequence and to provide for subsequent communications of data packets between such station and the other stations in the sequence, and

the first means being operative to provide a receipt of the vector by each of the spliced stations from the station immediately preceding such spliced station in the sequence and from the spliced station to the next station in the sequence.

5. In combination,

a plurality of stations disposed in a progressive sequence, each of the stations being disposed at an individual position in the sequence and being constructed to communicate a data packet to other stations in the sequence,

means for providing for the passing of a vector from successive stations in the sequence to the next stations in the sequence to activate such next stations for the communication of a data packet from such next stations to other stations in the sequence, and

means for removing from the sequence individual ones of the stations in the sequence upon the receipt of the vector by such individual ones of such stations and for thereafter providing for the passage of the vector to the successive stations in the sequence without any provision for the passage of the vector to the removed stations in the sequence.

6. In a combination as set forth in claim 5,

the removing means including means for providing for a communication from each of the stations to be removed to the previous station in the sequence, upon the receipt of the vector by the station to be removed, to obtain the removal of such station from the sequence, and

means for thereafter providing in the sequence for the passage of the vector from such previous station in the sequence to the station immediately following such removed station in the sequence.

7. In a combination as set forth in claim 6,

the communicating means for each of the stations immediately preceding one of the stations to be removed being initially operative to provide for the passing of the vector to such station to be removed and such station to be removed thereafter communicating with the immediately preceding station to obtain the removal from the sequence of the station to be removed and to obtain the subsequent passage of the vector from such immediately preceding station to the station immediately following in the sequence such station to be removed.

8. In a combination as set forth in claim 5,

means responsive to the removal from the sequence of each of the stations to be removed from the sequence for providing for an indication in the station in the sequence immediately after the station to be removed that such station immediately after the station to be removed is thereafter to receive communications from the station in the sequence immediately preceding such station to be removed.

9. In combination,

a plurality of stations disposed in a progressive sequence, each of the stations being disposed at an individual position in the sequence,

means for providing for the passing of a vector from successive stations in the sequence to the stations next in the sequence to such successive stations, and

means for providing for the removal from the sequence of a plurality of successive stations in the sequence upon the receipt of the vector by such successive stations.

10. In a combination as set forth in claim 9,

means at the station immediately preceding in the sequence the stations to be removed from the sequence for communicating with the first one of the successive stations to be removed in the sequence, and

means at the station immediately preceding in the sequence the stations to be removed from the sequence for sequentially removing such stations from the sequence upon the failure of such successive stations to communicate with such immediately preceding station within a particular period of time after the communication of the vector from such immediately preceding station.

11. In a combination as set forth in claim 9,

means for indicating the difference in stations between the station immediately preceding the stations to be removed and the next station in the sequence after the stations to be removed, and

means for decreasing by an integer the difference in the sequence between the station immediately preceding the stations to be removed from the sequence and the next station in the sequence after the removal from the sequence of the stations to be removed until the difference indicates that such next station immediately follows such immediately preceding station.

12. In a combination as recited in claim 11,

means responsive to the failure to respond within a particular time of the first station to be removed in the sequence for transmitting signals from the immediately preceding station to an imaginary station zero, and

means responsive to each transmission to the imaginary station zero of signals from the immediately preceding station for decreasing by an integer the difference in the sequence between such immediately preceding station and such next station until the difference indicates that such next station immediately follows such immediately preceding station.

13. In combination,

a plurality of stations, first particular ones of the stations in the plurality having a first particular mode disposed in a first sequence, each of the stations being disposed at an individual position in the first sequence and being constructed to provide for the passing of a vector to adjacent stations in the first sequence,

means for providing for the passing of the vector to the successive ones of the first particular stations in the first sequence in the first particular mode,

individual ones of the stations in the plurality also being disposed in a second particular mode higher than the first particular mode to operate in the second particular mode in a second sequence different from the first sequence, and

61

means operative at any one of the individual stations in the second sequence in the first particular mode for obtaining an operation of the individual stations in the second sequence in the second particular mode when such station provide for the passing of the vector in the second particular mode.

14. In a combination as set forth in claim 13,

means for indicating for each station in the plurality whether such station is included in the first particular mode,

means operative with the stations in the second sequence in the second particular mode for indicating periodically, to maintain the operation of such stations in the second particular mode, that such stations should continue to operate in the second particular mode, and

means for providing for the conversion of the stations from an operation in the second particular mode to an operation in the first particular mode when none of the stations in the second sequence indicates periodically that such stations should continue to operate in the second particular mode.

15. In a combination as set forth in claim 13,

the vector-passing means for the successive ones of the first particular stations including means at each successive one of such stations for providing for the passing of the vector to the next one of such stations and means at each successive one of such next stations for communicating a data packet to at least another one of the stations in the first particular mode after it has accepted the vector.

16. In a combination as set forth in claim 14,

means for splicing into the second sequence one of the stations in the first sequence, but not in the second sequence, to obtain an operation in the second sequence of the stations previously in the second sequence and the station spliced into the second sequence.

17. In combination,

a plurality of stations constructed to be disposed in a progressive sequence, each of the stations being disposed at an individual position in the sequence and being constructed to provide for the passing of a vector to the next stations in the sequence and to communicate a data packet to at least another station in the sequence, each of the stations having an individual delay for providing for the passing of the vector to the next station in the sequence, such individual delay for each station in the sequence being different from the delay for other station in the sequence,

means in a start-up mode for selecting the station with the least delay, and

means for thereafter sequentially splicing into the sequence other stations in the plurality.

18. In a combination as set forth in claim 17,

each of the stations including means for indicating its position relative to adjacent stations in the plurality,

means for providing for the passing of a vector from each station upon the splicing of the station into the sequence, and

means for decrementing the indication of position of stations not yet spliced into the sequence every time that a station already in the sequence unsuccessfully attempts to provide for the passing of the vector to others of the stations not yet in the sequence.

19. In a combination as set forth in claim 17,

the splicing means including means in each of the stations for initially providing for the passing of the vector to another station in the sequence and for thereafter providing for the passage of the vector to an imaginary station upon the failure of the next station in the sequence to respond within a particular period of time,

means responsive to the communication of the vector to the imaginary station from each of the stations for decrementing by an integer the indication of the positions of the stations not yet spliced into the sequence, and

means for obtaining a splicing into the sequence of other stations not yet spliced into the sequence when the indications of the positions of such other stations have decremented to a particular value.

20. In a combination as set forth in claim 17,

means for communicating a data packet from each individual one of the stations in the sequence to another station in the sequence after the splicing of such individual station into the sequence.

**21.** In a combination as recited in claim 20, the communicating means for each station in the sequence including:

means in each of the stations in the sequence for providing for the passing of the vector to the next station in the sequence, and

means in each of the next stations in the sequence for thereafter communicating a data packet to at least one other station in the sequence after it has received the vector.

**22.** In combination,

a plurality of stations each disposed at an individual position in a sequence and constructed to communicate with other stations in the sequence,

means for communicating a data packet from each station in the sequence to at least another station in the sequence,

means for providing for the passing of a vector from the communicating station to the next station in the sequence, and

means for activating the next station in the sequence, upon the communication of the vector to the next station, to provide a communication of a data packet from the next station to at least another station in the sequence and thereafter to provide for the passing of the vector from the next station to the station following the next station.

**23.** In a combination as set forth in claim 22,

means at each communicating station in the sequence for providing for a communication of a data packet from the next station in the sequence to another station in the sequence after a first particular period of time, and

means at each communicating station in the sequence for splicing into the sequence another station not then in the sequence upon a communication from such other station to the communicating station in a second time period less than the particular time period that it wishes to be spliced into the sequence, such other station being disposed at a position between the communicating station and the next station in the sequence.

**24.** In a combination as set forth in claim 23,

means at the communicating station for providing for the passing of the vector to the next station upon the failure of the other station to splice into the sequence within the second time period and the failure of the next station to communicate data packet to another station in the sequence within the first particular time period after the communication of the vector from the communicating station,

means at the station following the next sequence in the sequence for communicating a data packet to another station in the sequence, after a particular number of the communications of the vector from the communicating station, and

means at the communicating station for thereafter providing for the passing of the vector to the following station.

**25.** In a combination as set forth in claim 24,

means at each of the stations in the sequence for providing such station with an individual period for the comunication of the data packet and the vector by that station, and

means for synchronizing the operation of the stations in the sequence with the operation of that station in the sequence with the longest period of time for the communication of the data packet and the vector by that station.

**26.** In combination,

a plurality of stations each disposed at an individual position in a sequence and constructed to communicate data packets to other stations in the sequence,

means for providing for the passing of a vector from each individual station in the sequence to the next station in the sequence after the communication of the data packet from such individual station to another station in the sequence,

means at the next station in the sequence for providing a response to the communication of the vector from such individual station that it wishes to be spliced out of the sequence, and

means at the individual station for splicing out the next station and for substituting the station following the next station in the sequence as the station to which it should provide for the passing of the vector.

27. In a combination as set forth in claim 26,
    means at the individual station for providing for the passing of the vector to the following station after splicing out the next station, and
    means at the following station for communicating a data packet to another station in the sequence after receiving the vector from the individual station.

28. In a combination as set forth in claim 27,
    means at the following station for providing for the passing of the vector immediately successive station in the sequence after communicating a data packet to another station in the sequence.

29. In a combination as set forth in claim 28,
    each of the stations having an individual rate for comunications with other stations in the sequence, and
    means at the stations in the sequence for providing for the communication between the stations in the sequence at the slowest of the individual rates of the stations in the sequence.

30. In combination,
    a plurality of stations each disposed at an individual position in a sequence and constructed to communicate with other stations in the sequence,
    means for communicating a data packet from each station in the sequence to at least another station in the sequence,
    means for providing for the passing of a vector from the communicating station to the next station in the sequence upon the communication and acceptance of the data packet from the communicating station,
    means at the next station in the sequence for communicating a data packet to another station in the sequence after receiving the vector from the communicating station, and
    means at the communicating station for providing another communication of the vector upon the failure of the next station to respond to the communication of the vector from the communicating station within a particular time after the first communication of the vector from the communicating station.

31. In a combination as set forth in claim 30,
    means at the station in the sequence following the next station for splicing into the sequence in substitution for the next station in the sequence upon the failure of the next station in the sequence to respond to any of a plurality of successive communications of the vector from the communicating station.

32. In a combination as set forth in claim 30,
    means at a station in the sequence between the communicating station and the next station for splicing into the sequence at a position in the sequence between the communicating station and the next station in any of the successive communications of the vector from the communicating station, and
    means at the communicating station for thereafter providing for the passing of the vector to the station between the communicating station and the next station.

33. In a combination as set forth in claim 30,
    means at the stations in the sequence following the communicating station for indicating their positions in the sequence relative to the communicating station, and
    means at the station in the sequence following the next station for splicing into the sequence as the station following the communicating station upon the decrement to a particular value of its indication of its position in the sequence relative to the communicating station after the failure of the next station to respond a particular number of times to the communication of the vector from the communicating station.

34. In combination,
    a plurality of stations disposed in a sequence, each of the stations being disposed at an individual position in the sequence and being constructed to communicate with at least another station in the sequence,
    means for communicating data packets from successive stations in the sequence to other stations in the sequence,

means for broadcasting a data packet from a particular station in the sequence to all of the other stations in the sequence, and

means for providing for the passing of a vector from each individual one of the stations in the sequence to the next station in the sequence upon the communication of the data packet from such individual station.

35. In a combination as set forth in claim 34,

means responsive at each of the next ones of the stations in the sequence to the receipt of the vector from each station preceding to such next station for communicating a data packet to at least another station in the sequence.

36. In a combination as set forth in claim 35,

means responsive at each next station in the sequence to the receipt of the vector from each preceding station in the sequence for communicating a data package to another station in the sequence,

means for providing for the passing of the vector from the next station to the station following the next station in the sequence after the communication of the data packet from the next station,

means responsive at each following station in the sequence to the receipt of the vector from each next station for,

communicating a data packet to at least another station in the sequence.

37. In combination,

a plurality of stations each disposed at an individual position in a sequence and constructed to communicate data packets to at least another station in the sequence,

means for providing a communication of a data packet from each station in the sequence to at least another one of the stations in the sequence,

means operative after the communication of a data packet from each station in the sequence to another station in the sequence for providing for the passing of a vector to the next station in the sequence,

means at the next station in the sequence for
for communicating a data packet to another station in the sequence upon the receipt of such vector by such next station.

38. In a combination as set forth in claim 37,

means at the next station for communicating to the communicating station, upon the receipt of the vector from the communicating station, that it desires to be spliced out of the sequence, and

means responsive at the communicating station to the communication of the desire from the next station to be spliced out of the sequence for splicing out the next station from the sequence.

39. In a combination as set forth in claim 38,

means responsive at the communicating station to the splicing out of the next station from the sequence for providing for the passing of the vector to the station following the next station in the sequence to activate the following station in the sequence for communication with one of the other stations in the sequence.

40. In a combination as set forth in claim 37,

means at another station in the sequence between the communicating station and the next station for communicating to the communicating station, before any communicating by the next station, that it desires to be spliced into the sequence.

41. In a combination a set forth in claim 40,

means responsive at the communicating station to the communication from the other station between the communicating station and the next station for splicing such other station into the sequence and for thereafter providing for the passing of the vector to the other station in the sequence.

42. In combination,

a plurality of stations disposed in a sequence,

each of the stations being disposed at an individual position in the sequence and being constructed to communicate data packets and vectors to other stations in the sequence,

means for communicating data packets from successive stations in the sequence to other stations in the sequence,

means for indicating the position between each station and the adjacent station in the sequence, means operative upon a loss of communication between a communicating station and at least a pair of stations successive in the sequence to the communicating station for providing for a decrement of the indication of the position of other stations in the sequence relative to the communicating station upon each successive communication of the vector from the communicating station, and

means operative upon a decrement of the indication of the position of an individual one of the other stations in the sequence to a particular value relative to the communicating station upon each successive communication of the vector from the communicating station for providing for the passing of the vector from the communicating station to such individual station to obtain the subsequent communication of a data packet from such individual station to at least another station in the sequence.

43. In a combination as set forth in claim 42,

means operative upon the receipt of the vector from the communicating station by the individual one of the other stations in the sequence for resuming receipt of the vector from the successive stations remaining in the sequence to the following stations in the sequence to obtain a subsequent communication of data packets from such successive stations in the sequence.

44. In a combination as set forth in claim 43,

means operative upon the communication of a data packet from each communicating station in the sequence to at least another station in the sequence for providing for the passing of the vector from such communicating station to the next station in the sequence,

means responsive at the next station to the communication of the vector from the communicating station for, and

communicating a data packet to at least another station in the sequence.

45. In a combination as set forth in claim 44,

means operative at the communicating station, upon the failure of the next station to communicate a data packet to another station in the sequence, for providing for the passing of the vector again to the next station,

means operative at the communicating station, upon the failure of the next station to communicate a data packet to another station in the sequence in subsequent communications of the vector by the communicating station, for providing a splicing by the communicating station to the station following the next station in the sequence as the station to which the communicating station should provide for the passing of the vector,

means at the communicating station for providing for the passing of the vector to the following station, and

means responsive at the following station to the receipt of the vector from the communicating station for communicating a data packet to another station in the sequence.

46. In combination,

a plurality of stations disposed in a sequence, each of the stations being constructed to communicate a data packet to other stations in the sequence,

means at each of the stations in the sequence for communicating a data packet to at least another station in the sequence,

means at each of the communicating stations in the sequence for providing for the passing of a vector to the next station in the sequence after the communication of the data packet from such communicating station to at least another station in the sequence,

means operative at the next station after a particular period of time from the communication of the vector from the communicating station for communicating a data packet to at least another station in the sequence,

means operative at a particular station disposed between the communicating station and the next station, but not included in the sequence, for communicating to the communicating station in a time period less than the particular period that it wishes to be spliced into the sequence,

means operative at the communicating station, in response to the splice-in communication from the particular station, for splicing the particular station into the sequence for the subsequent provision by the communicating means at each of the communicating stations and the individual station being operative to identify such station upon the passing of a data packet from such station and being operative to communicate data packets to other stations in the sequence and being operative to identify in such data packets different types of data being communicated to such other stations.

54. In combination in an individual station included in a sequence for the successive activation of the individual station and the other stations in the sequence, the individual station in the sequence being displaced from the other stations in the sequence and being activated, upon the passing of a vector to such individual station, for the communication of a data packet from such individual station to at-least another station in the sequence,

means at the individual station for receiving a vector from the immediately preceding station in the sequence,

means at the individual station for communicating a data packet to at least another station in the sequence upon the receipt of the passing of the vector by such individual station, and

means at the individual station for providing for the passing of the vector to the next station in the sequence upon the communication of the data packet to at least another station in the sequence.

55. In a combination as set forth in claim 54,

the communicating means at the individual station being operative at the particular time after the receipt of the vector from the communicating station, and

the vector-passing means at the individual station being operative at the particular time after the communication of the data packet by the communicating means.

56. In a combination as set forth in claim 54,

the receiving means including a first register identifying the immediately preceding station in the sequence,

the vector-passing means including a second register for identifying the next station in the sequence, and

the individual station including a third register for identifying the individual station.

57. In a combination as set forth in claim 54,

the communicating means for the individual station including means for communicating the data packet to a selective group of stations in the sequence or for broadcasting the data packet to all of the other stations in the sequence.

58. In combination in an individual station included in a sequence for the successive actuation of the individual station and the other stations in the sequence, each of the stations in the sequence being displaced from the other stations in the sequence and being activated, upon the passing of a vector to such individual station, for the communication of a data packet from such individual station to at least another station in the sequence,

means at the individual station for receiving a vector from the immediately preceding station in the sequence,

means at the individual station for communicating a data packet to other stations in the sequence, after the receipt of the vector by the individual station, to be spliced out of the sequence, and

means at the individual station for communicating a vector to the other stations in the sequence.

59. In a combination as set forth in claim 58,

means including a first register at the individual station for indicating the station which is passing the vector to the individual station, and

means including a second register at the individual station for identifying the individual station.

60. In a combination as set forth in claim 59 where the sequence is able to operate in a first mode and at least some of the stations in the sequence are able to operate in a second mode different from the first mode,

means at the individual station for identifying whether the individual station is to operate in the first mode or second mode.

61. In a combination as set forth in claim 58,

means at the individual station for communicating to the other stations that the second stations operative in the second mode are to operate in the second mode.

62. In combination in an individual station for the inclusion of the individual station in a sequence including other stations for the successive actuation of the individual station and the other stations in the sequence, the individual station in the sequence being displaced from the other stations in the sequence and being activated, upon the passing of a vector to such individual station, for the communication of a data vector from such individual station to at least another station in the sequence,

means at the individual station for receiving a vector from the immediately preceding station in the sequence,

means at the individual station for communicating a data packet to at least another station in the sequence after the individual station has received the vector from the immediately preceding station and when the individual station is included in the sequence, and

means at the individual station for communicating a data packet to the immediately preceding station in the sequence, when the individual station is not included in the station and when the vector received by the individual station from the immediately preceding station is intended for the next station after the individual station, that it wishes to be spliced into the sequence.

63. In a combination as set forth in claim 62,

means including a first register at the individual station for identifying the individual station,

means including a second register at the individual station for identifying the preceding station in the sequence, and

means including a third register at the individual station for identifying the next station in the sequence.

64. In a combination as set forth in claim 63,

means at the individual station for providing for the passing of the vector to the next station in the sequence after the individual station has communicated a data packet to at least another station in the sequence.

65. In a combination as set forth in claim 64 where the sequence is able to operate in a first mode and at least some of the stations in the sequence are able to operate in a second mode different from the first mode,

means at the individual station for identifying whether the individual station is to operate in the first mode or the second mode.

66. In combination in an individual station included in a sequence for the successive actuation on a cyclic basis of the individual station and the other stations in the sequence, the individual station in the sequence being displaced from the other stations in the sequence and being activated, upon the passing of a vector to such individual station, for the communication of a data packet from such individual station to at least another station in the sequence,

means at the individual station for receiving a vector from the immediately preceding station in the sequence,

means at the individual station for passing a data packet to at least another station in the sequence after receiving the vector,

means at the individual station for providing for the passing of a vector to the next station in the sequence, and

means at the individual station for splicing into the sequence a particular station between the individual station and the next station when the individual station receives a communication to this effect from the particular station before the reception by the individual station of any communication from the next station after the next station has received the vector from the individual station.

67. In a combination in the individual station as set forth in claim 66,

means at the individual station for identifying the individual station,

means at the individual station for identifying the immediately preceding station,

means at the individual station for identifying the next station, and

means at the individual station for substituting the particular station for the next station when the individual station splices the particular station into the sequence.

**68.** In a combination as set forth in claim 66,

means at the individual station for adjusting the time of response of the individual station to the time of response of the slowest station in the sequence.

**69.** In a combination as set forth in claim 67,

means at the individual station for adjusting the time of response of the individual station to the time of response of the slowest station in the sequence, and

the means at the individual station for communicating the data packet providing for the communication of the data packet from the individual station to another station, a group of the stations in the sequence or all of the stations in the sequence.

**70.** In combination in an individual station in a sequence for the successive actuation on a cyclic basis of the individual station and the other stations in the sequence, the individual station in the sequence being displaced from the other stations in the sequence and being activated, upon the passing of a vector to such individual station, for the communication of a data packet from such individual station to at least another station in the sequence,

means at the individual station for receiving a vector from the immediately preceding station in the sequence,

means at the individual station for providing for the passing of a vector to the next station in the sequence, and

means at the individual station for splicing the next station out of the sequence upon the receipt by the individual station of an indication from the next station of a desire to be spliced out of the sequence and for thereafter providing for the passing of the vector to the station following the next station in the sequence.

**71.** In a combination as set forth in claim 70,

first register means at the individual station for indicating the identity of the individual station,

second register means at the individual station for indicating the identity of the immediately preceding station in the sequence, and

third register means at the individual station for indicating the identity of the next station in the sequence.

**72.** In a combination as set forth in claim 70,

means at the individual station for communicating a data packet to at least another station in the sequence after the receipt of the vector from the immediately preceding station.

**73.** In a combination as set forth in claim 71,

means operative at the individual station upon the receipt by the individual station of the vector from the immediately preceding station for communicating a data packet to at least another station in the sequence or a selected group of stations in the sequence or for broadcasting a data packet to all of the other stations in the sequence.

**74.** In combination in an individual station included in a sequence for the successive actuation on a cyclic basis of the individual station and the other stations in the sequence, the individual station in the sequence being displaced from the other stations in the sequence and being activated, upon the passing of a vector to such individual station, for the communication of a data packet from such individual station to at least another station in the sequence,

means at the individual station for receiving a vector from the immediately preceding station in the sequence,

means operative at the individual station upon the receipt of the vector from the immediately preceding station for communicating a data packet to at least another station in the sequence or to a selected group of stations in the sequence or for broadcasting a data packet to all of the other stations in the sequence,

means at the individual station for providing for the passing of the vector to the next station in the sequence after the communication of the data packet, and

means operative at the individual station upon the failure of the next station, or any station between the individual station and the next station, to respond to any receipt of the vector within a particular period of time for providing for the passing of the vector again to the next station.

70

**75.** In a combination as set forth in claim 74,

means at the individual station for splicing into the sequence the station following the next station in the sequence when the next station fails to communicate a data packet to another station within a particular time after the second communication of the vector from the individual station and the following station communicates a desire to the individual station to be spliced into the sequence.

**76.** In a combination as set forth in claim 74,

means at the individual station for providing for the passing of the vector to an imaginary station and for providing for the reception of such vector by the other stations in the sequence upon the failure of any station in the sequence to communicate with another station in a particular number of successive communications of the vector from the individual station.

**77.** In a combination as set forth in claim 76,

means at the individual station for adjusting the time for the operation of the individual station to the particular time corresponding to the time of response of the slowest station in the sequence.

**78.** In combination in an individual station included in a sequence for the successive actuation on a cyclic basis of the individual station and the other stations in the sequence, the individual station in the sequence being displaced from the other stations in the sequence and being activated, upon the passing of a vector to such individual station, for the communication of a data packet from such individual station to at least another station in the sequence,

means at the individual station for receiving a vector from the immediately preceding station in the sequence,

means operative at the individual station, upon the receipt of the vector from the immediately preceding station, for communicating a data packet to at least another station in the sequence or to a selected group of stations in the sequence or for broadcasting a data packet to all of the other stations in the sequence,

register means at the individual station for providing a count indicating a station number for the individual station relative to a station passing a vector to an imaginary station 0, and

means at the individual station, operative upon the loss of the immediately preceding station from the sequence and the loss from the sequence of the station before the immediately preceding station in the sequence and operative upon each communication of the vector to the station 0 from another station before the lost stations in the sequence, for decrementing the count in the register means by an integer.

**79.** In a combination as set forth in claim 78,

means operative at the individual station for communicating, to the station communicating the vector to the imaginary station 0, a desire to be spliced into the sequence as the station immediately after the station communicating the vector to the imaginary station 0.

**80.** In a combination as set forth in claim 81, first register means at the individual station for identifying the individual station,

second register means at the individual station for identifying the immediately preceding station, and

third register means for indicating the station number relative to the station passing the vector to the imaginary station 0.

**81.** In a combination as set forth in claim 81, the different stations in the sequence having individual response times, and

means at the individual station for adjusting its response time to communications from and to other stations to the slowest response time of the different stations in the sequence.

**82.** In combination in an individual station included in a first sequence for the succesive actuation on a cyclic basis of the individual station and the other stations in the first sequence, the individual station in the first sequence being displaced from the other stations in the first sequence and being activated, upon the passing of a vector to such individual station for the communication of a data packet from such individual station to at least another station in the sequence,

means at the individual station for receiving a vector from the immediately preceding station in the first sequence,

means operative at the individual station upon the receipt of the vector from the immediately preceding vector in the first sequence for communicating a data packet to at least another station in the first sequence or to a selected group of stations in the first sequence or for broadcasting a data packet to all of the other stations in the first sequence,

the individual station being operative in a second sequence different from the first sequence, and

means at the individual station for providing for passing of the vector to the next station in the first sequence to maintain the operation in the first sequence or for passing the vector to the next station in the second sequence with instructions to operate in the second sequence.

83. In a combination as set forth in claim 82,

means at the individual station for maintaining the operation in the second sequence by providing for the passing of the vector to the next station in the second sequence in each cycle of operation with instructions to operate in the second sequence.

84. In a combination as set forth in claim 83,

means at the individual station for returning to the operation in the first sequence and for providing for the passing of the vector to the next station in the first sequence upon the failure of the individual station and the other stations in the second sequence to provide for the passing of the vector to the next station in the second sequence in a cycle of operation with instructions to operate in the second sequence.

85. In a combination as set forth in claim 84,

first register means at the individual station for identifying the individual station,

second register means at the individual station for identifying the immediately preceding station in the particular one of the first and second sequences in which the individual station is operating, and

third register means at the individual station for identifying the next station in the particular one of the first and second sequences in which the individual station is operating.

VECTOR ss->nn

| Preamble | Flag | Address Station ID | Source | Packet Type | Packet Data | CRC | Flag |
|---|---|---|---|---|---|---|---|
| :·1····11 | 111111 | FFnn | ss | pd | pmi/pma | cccc | 1 11111 |

SYNCHRONIZATION

| 111····111 | 111111 | FE 00 | ss | // | | cccc | 111111 |

SPLICE ss->nn FOR dd

| 1·····1:· | 111111 | FD nn | ss | sd | | cccc | 11111.1 |

RESPONSE ss->nn

| 111····11 | 111111 | F8 nn | ss | STATUS:ACCEPT/REJ·NO·BFFR | | cccc | 111111 |

DATA ss->nn

| 111·····111 | 111111 | FC nn | ss | RTV | ddd...ddd | cccc | 111111 |

BROADCAST ss->gggg

| 1·····11! | 111111 | gggg | ss | RTV | ddd...ddd | cccc | 111111 |

BROADCAST->ALL NODES

| 111·····11 | 111111 | FFFF | ss | RTV | ddd...ddd | cccc | 111111 |

PREAMBLE FLAG ADDRESS SOURCE PACKET PACKET DATA CYCLIC FLAG
STATION ID TYPE REDUNDANCY
CHECK

FIG. 1

NOTES

pd: PROCESSOR DELAY FACTOR (* 8 USECS)
pmi: PERFORMANCE MASTER INDICATOR.
pma: PERFORMANCE MODE ACTIVE.
RTV: REAL TIME VECTOR CODE
sd: SPLICE DATA
ddd...ddd 0 OR MORE DATA BYTES FOR THE RTV

0 LAYER MANAGEMENT ENTITY COMMANDS
1 SESSION MANAGMENT
2 MIDI (EVENTS, REAL-TIME, SYSTEM, SYSEX)
3 SMPTE
4 TAPE TRANSPORT
5-255 OTHER FUNCTIONALITIES AS ASSIGNED BY THE
MMA ASSIGNABLE DYNAMICALLY FROM.
FROM FFh DOWN FOR CUSTOM/
PROPRIETARY APPLICATIONS

FIG. 1A

EP 0 447 873 A2

## FIG. 2

END OF PACKET — IDLE

FLAG | MARKING

Pd = PROCESS DELAY TIME

0pd  1pd  2pd  3pd  4pd  5pd

SYNC  SPLICE VECTOR/DATA RETRY  LOST VECTOR

| PNID | NEXT PERFORMANCE IDENTIFICATION |
| NID | NEXT IDENTIFICATION |
| MID | MY IDENTIFICATION |
| PID | PREVIOUS IDENTIFICATION |

| SNR | STATION NUMBER RELATIVE |

## FIG. 2A

## FIG. 6

PERFORMANCE MODE

SETUP MODE.

EP 0 447 873 A2

FIG. 3

PERFORMANCE MODE
VECTOR PATH

SET-UP MODE
VECTOR PATH

COPY X

PERFORMANCE MODE
VECTOR PATH BEFORE
SPLICE-IN

FIG. 4

PERFORMANCE MODE
VECTOR PATH AFTER
SPLICE-IN

SPLICE-
IN

COPY Y

PERFORMANCE MODE
VECTOR PATH BEFORE
SPLICE-IN

FIG. 5

PERFORMANCE MODE
VECTOR PATH AFTER
SPLICE-OUT

SPLICE-
OUT

75

STATION 11 WANTS TO SPLICE

1. 11 WAITS FOR VECTOR TO PASS HIS NUMBER
2. 11 SENDS HIS WAITING DATA TO GROUP 9999
3. 11 SENDS THE VECTOR TO STATION n-1
4. 11 IS NOW SPLICED INTO THE PERFORMANCE RING

FIG. 4A

1. STATION 8 RECEIVES THE VECTOR AND HAS NOTHING TO SEND
2. 8 PASSES THE VECTOR TO 10
3. 10 WANTS TO SPLICE - OUT OF THE RING. 10 SENDS A SPLICE VECTOR BACK TO 8 WITH THE DATA SECTION OF THE SPLICE VECTOR POINTING TO STATION 12
4. THE NEXT CIRCUIT OF THE VECTOR GOES TO STATION 12 INSTEAD OF STATION 10

FIG. 5A

EP 0 447 873 A2

FIG. 7

SET-UP MODE

PERFORMANCE MODE

CHANGE BETWEEN SET-UP MODE AND PERFORMANCE MODE

FIG. 8

3(LOST)

ONE LOST STATION

FIG. 9

2(LOST)

3(LOST)

TWO LOST STATIONS.

# FIG. 10A

**ACKNOWLEDGED TRANSACTION**

ACKNOWLEDGED PACKET TRANSMISSION TIME

VECTOR FROM STATION 15 FOR STATION 1

`FF 0115 pd pi/pa`

DATA FROM STATION 1 FOR STATION 7

`FE 0701 RTV ddd...ddd`

`pd*2`

DATA RESPONSE FROM 7 TO 1

`FD 01 07 st`

`pd*2`

VECTOR FROM STATION 1 TO STATION 2

`FF 0201 pd pi/pa`

`pd*2`

**BROADCAST TRANSACTION**

BROADCAST PACKET TRANSMISSION TIME

VECTOR FROM STATION 4 FOR STATION 5

`FF 0504 pd pi/pa`

DATA FROM STATION 5 FOR GROUP 9999

`9999 05 RTV ddd...ddd`

`pd*2`

VECTOR FROM STATION 5 TO STATION 6

`FF 0605 pd pi/pa`

`pd*2`

# FIG. 10B

FIG. 10C

SPLICE-IN
TRANSACTION

VECTOR
ACQUISITION
TIME

| VECTOR FROM STATION 9 TO STATION 12 | DATA FROM STATION 11 FOR GROUP 9999 | VECTOR FROM STATION 11 TO STATION 12 |
|---|---|---|
| FF 12 09 pd pi/pa | 9999 11 RTV ddd...ddd | FF 12 11 pd pi/pa |

n DATA BYTES

pd

pd*2

FIG. 10D

SPLICE-OUT
TRANSACTION

VECTOR
TRANSMISSION
TIME

VECTOR YIELD TIME

| VECTOR FROM STATION 9 TO STATION 12 | VECTOR FROM STATION 12 TO STATION 15 | STATION 15 YIELDS VECTOR TO STATION 12 | VECTOR FROM SECTION 12 TO SECTION 20 |
|---|---|---|---|
| FF 12 09 pd pi/pa | FF 15 12 pd pi/pa | FD 12 15 20 | FF 20 12 pd pi/pa |

pd*2

pd*2

pd*2

FIG. 10E

LOST STATION RECOVERY     FIG. 10E

| VECTOR FROM STATION 9 TO STATION 12 | VECTOR FROM STATION 9 TO STATION 12 | VECTOR FROM STATION 9 TO STATION 12 | INVITATION TO SPLICE VECTOR |
| FF 12 09 pd pi/pa | FF 12 09 pd pi/pa | FF 12 09 pd pi/pa | FF 00 09 pd pi/pa |

2pd       2pd       2pd       2pd

LOST VECTOR RECOVERY/STARTUP

FF 00 mm pd pi/pa     FF 00 mm pd pi/pa

pd*5     pd*mm     pd*2     pd*2

FD mm nn nn     FF nn mm pd pi/pa

FIG. 10F     pd     Pd*2     Pd*2

EP 0 447 873 A2

80